# EUROPEAN PATENT SPECIFICATION

(11) **EP 4 290 738 B1**
(45) Date of publication and mention of the grant of the patent: **10.09.2025**
(21) Application number: 22844957.5
(22) Date of filing: 16.05.2022
(51) Int. Cl.: H02J 50/12, H02J 50/00, H02J 7/34

(54) **WIRELESS CHARGING SYSTEM AND WIRELESS CHARGING PEN BOX**
DRAHTLOSES LADESYSTEM UND STIFTKASTEN ZUM DRAHTLOSEN LADEN
SYSTÈME DE CHARGE SANS FIL ET BOÎTIER DE STYLO DE CHARGE SANS FIL

(30) Priority: 22.07.2021 CN 202110832018
(43) Date of publication of application: 13.12.2023
(73) Proprietor: Honor Device Co., Ltd., Shenzhen, Guangdong 518040 (CN)
(72) Inventor: WU, Yuan, Shenzhen, Guangdong 518040 (CN); ZHANG, Wei, Shenzhen, Guangdong 518040 (CN); WANG, Feng, Shenzhen, Guangdong 518040 (CN); WANG, Chao, Shenzhen, Guangdong 518040 (CN); ZHAO, Lilie, Shenzhen, Guangdong 518040 (CN); MA, Lei, Shenzhen, Guangdong 518040 (CN)
(74) Representative: Gill Jennings & Every LLP
(86) International application number: PCT/CN2022/093174
(87) International publication number: WO 2023/000790

(56) References cited:
- CN-A- 105 515 222
- CN-A- 110 875 640
- CN-A- 112 698 733
- CN-A- 113 726 024
- CN-U- 212 935 580
- JP-A- 2015 141 687
- TW-B- I 675 525
- TW-B- I 675 525
- US-A1- 2014 375 258
- US-A1- 2017 250 563
- US-A1- 2019 311 848

## Description

This application claims priority to Chinese Patent Application No. 202110832018.8, filed with the China National Intellectual Property Administration on July 22, 2021, and entitled "WIRELESS CHARGING SYSTEM AND WIRELESS CHARGING STYLUS BOX".

### TECHNICAL FIELD

This application relates to the field of electronic technologies, and in particular, to a wireless charging system and a wireless charging stylus box.

### BACKGROUND

With development of science and technology, terminal devices such as a tablet computer and a notebook computer are equipped with styluses. The styluses are configured to implement touch control or writing on the terminal devices to enable the terminal devices to perform corresponding functions.

Currently, most of the styluses use a wireless charging manner to charge batteries in the styluses. A transmit coil is disposed in the terminal device, a receive coil is disposed in the stylus, and after the stylus is adsorbed on a surface of the terminal device, the terminal device charges the stylus.

However, after the stylus is adsorbed on the surface of the terminal device, magnetic cores of the transmit coil and the receive coil are placed opposite and parallel to each other, and a coupling coefficient between the transmit coil and the receive coil is low. Consequently, wireless charging efficiency is low.

US 2019/311848 A1 discloses an inductive power transfer assembly.

TWI675525 B discloses a wireless charging active touch system and a method of wireless charging an active touch system.

CN 212935580 U discloses a multifunctional pencil box.

US 2017/250563 A1 discloses charging apparatus for charging a portable electronic device.

### SUMMARY

Embodiments of this application provide a wireless charging system and a wireless charging stylus box, to increase a coupling coefficient between a transmit coil in a wireless charging device and a receive coil in a stylus during charging, and further improve wireless charging efficiency.

According to a first aspect, an embodiment of this application provides a wireless charging system in accordance with appended claim 1.

The terminal device is a wireless charging device, the housing of the terminal device is a second housing on which a keyboard is mounted, the stylus body includes a stylus tip, a stylus rod, and a back cover, and the first receive coil may be located in the stylus rod of the stylus body.

In the wireless charging system in this application, both of the two end faces of the magnetic core in each first transmit coil are disposed to face the first accommodating groove, and the end faces of the magnetic core in each first receive coil in the stylus are disposed to face the sidewall of the stylus body, so that after the stylus is placed in the first accommodating groove, both of the two end faces of the magnetic core in one of the two first transmit coils and an end face of the magnetic core in each first receive coil that faces the one of the two first transmit coils coupled to each first receive coil have at least regions partially disposed directly opposite to each other, and both of the two end faces of the magnetic core in the other of the two first transmit coils and an end face of the magnetic core in each first receive coil that faces the other of the two first transmit coils coupled to each first receive coil have at least regions partially disposed directly opposite to each other. Therefore, when a magnetic field generated by the two first transmit coils is emitted from and enters the two end faces of each magnetic core separately, a large part of the magnetic field emitted from or entering the end face that is of the magnetic core in each first transmit coil is coupled by the two first receive coils, thereby increasing a coupling coefficient between the two first transmit coils and the two first receive coils, and improving wireless charging efficiency. In addition, when the two series-connected first transmit coils are disposed in the terminal device, the coupling coefficient between the two first transmit coils and each first receive coil can be further increased.

Optionally, after the stylus is placed in the first accommodating groove, orthographic projections, in a first target direction, of both of the end faces of the magnetic core in one of the two first transmit coils cover at least orthographic projections, in the first target direction, of the end face of the magnetic core in each first receive coil that faces the one of the two first transmit coils coupled to each first receive coil; orthographic projections, in the first target direction, of both of the end faces of the magnetic core in the other of the two first transmit coils cover at least orthographic projections, in the first target direction, of the end face of the magnetic core in each first receive coil that faces the other of the two first transmit coils coupled to each first receive coil; and the first target direction is a direction in which the one of the two first transmit coils points to the first accommodating groove. In this case, after the stylus is placed in the first accommodating groove, the end faces of the magnetic core in each of the two first transmit coils are completely disposed directly opposite to end faces of the magnetic core in each first receive coil that faces the first transmit coil coupled to each first receive coil, thereby further increasing the coupling coefficient between the two first transmit coils and the two first receive coils. The first target direction is also a third direction.

Optionally, after the stylus is placed in the first accommodating groove, a central axis of each first transmit coil coincides with a central axis of the two series-connected first receive coils; and the central axis of each first transmit coil is a central axis between center points of the two end faces of the magnetic core in the respective first transmit coil, and the central axis of the two series-connected first receive coils is a central axis between center points of two end faces that are of the magnetic cores in the two series-connected first receive coils and that are disposed on a same side. In this way, the end faces of the magnetic core in each first transmit coil and the end faces of the magnetic core in each first receive coil can be prevented from being misaligned, thereby further increasing the coupling coefficient between the two first transmit coils and the two first receive coils.

Optionally, for each of the two end faces of the magnetic core in one of the two first transmit coils, a distance between the end face and the end face of the magnetic core in each first receive coil that faces the one of the two first transmit coils coupled to each first receive coil is 3 mm to 5 mm; and for each of the two end faces of the magnetic core in the other of the two first transmit coils, a distance between the end face and the end face of the magnetic core in each first receive coil that faces the other of the two first transmit coils coupled to each first receive coil is 3 mm to 5 mm. In this way, the distance between the end faces of the magnetic core in each first transmit coil and the end faces of the magnetic core in each first receive coil can be shortened, thereby further increasing the coupling coefficient between the two first transmit coils and the two first receive coils.

Optionally, the stylus further includes a first Rx chip, a charging management chip, and a first battery that are disposed in the stylus body, and the two first receive coils, the first Rx chip, the charging management chip, and the first battery are sequentially connected. The terminal device further includes a second battery, a first voltage regulator circuit, and a first Tx chip that are disposed in the housing, and the second battery, the first voltage regulator circuit, the first Tx chip, and the two first transmit coils are sequentially connected. The second battery is configured to provide a first direct current electrical signal to the first voltage regulator circuit. The first voltage regulator circuit is configured to perform voltage regulation processing on the first direct current electrical signal, and provide the first direct current electrical signal obtained after the voltage regulation processing to the first Tx chip. The first Tx chip is configured to convert the first direct current electrical signal obtained after the voltage regulation processing into a second alternating current electrical signal, and transmit the second alternating current electrical signal to the two first transmit coils. The two first transmit coils are configured to generate the first alternating electromagnetic field in response to the second alternating current electrical signal. The two first receive coils are configured to generate the first alternating current electrical signal by inducing the first alternating electromagnetic field, and transmit the first alternating current electrical signal to the first Rx chip. The first Rx chip is configured to convert the first alternating current electrical signal into a second direct current electrical signal, and transmit the second direct current electrical signal to the charging management chip. The charging management chip is configured to charge the first battery by using the second direct current electrical signal. In this way, the terminal device can charge the stylus.

According to a second aspect, an embodiment of this application provides a wireless charging stylus box in accordance with appended claim 6. Optional implementations of the second aspect are provided in accordance with appended claims 7 to 10.

According to a third aspect, an embodiment of this application provides a wireless charging system in accordance with appended claim 11.

It should be understood that the third aspect of this application partially corresponds to the technical solution of the second aspect in the embodiments of this application, and beneficial effects achieved by the aspects and corresponding feasible implementations are similar. Details are not described again.

### BRIEF DESCRIPTION OF DRAWINGS

FIG. 1 is a schematic diagram of charging a stylus by a terminal device in a related technology;
FIG. 2 is a schematic diagram of a scenario to which an embodiment of this application is applicable;
FIG. 3 is a schematic diagram of a structure of a stylus according to an embodiment of this application;
FIG. 4 is a schematic diagram of a partially split structure of a stylus according to an embodiment of this application;
FIG. 5 is a schematic diagram of accommodating a stylus in an accommodating groove of a terminal device according to an embodiment of this application;
FIG. 6 is a schematic diagram of a structure of a transmit coil and a receive coil according to an embodiment of this application;
FIG. 7 is a schematic diagram of another structure of a transmit coil and a receive coil according to an embodiment of this application;
FIG. 8 is a diagram of a system architecture of a wireless charging system according to an embodiment of this application;
FIG. 9 is a schematic diagram of a product form of a wireless charging stylus box according to an embodiment of this application;
FIG. 10 is a schematic diagram of accommodating a stylus in an accommodating groove of a wireless charging stylus box according to an embodiment of this application; and
FIG. 11 is a diagram of a system architecture of another wireless charging system according to an embodiment of this application.

### DESCRIPTION OF EMBODIMENTS

To clearly describe the technical solutions in the embodiments of this application, in the embodiments of this application, words such as "first" and "second" are used to distinguish between same items or similar items with basically the same functions and effects. For example, a first chip and a second chip are merely intended to distinguish between different chips, and a sequence of the first chip and the second chip is not limited. A person skilled in the art may understand that the words such as "first" and "second" do not limit a quantity and an execution sequence, and the words such as "first" and "second" do not indicate a definite difference.

It should be noted that in the embodiments of this application, a word such as "as an example" or "for example" is used to represent an example, an illustration, or a description. Any embodiment or design solution described as "as an example" or "for example" in this application should not be construed as being preferred or advantageous over other embodiments or design solutions. Exactly, use of the word such as "as an example" or "for example" is intended to present related concepts in a specific manner.

In the embodiments of this application, "at least one" means one or more, and "a plurality of" means two or more. The term "and/or" is used to describe an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following items" or a similar expression means any combination of these items, including any combination of a single item or a plurality of items. For example, at least one of a, b, or c may represent a, b, c, a-b, a-c, b-c, or a-b-c, where a, b, and c may be singular or plural.

Currently, some terminal devices such as a tablet computer and a notebook computer are equipped with styluses. The styluses are configured to implement touch control or writing on the terminal devices to enable the terminal devices to perform corresponding functions. A battery needs to be disposed in the stylus, and power is supplied to each component in the stylus by using the battery, so that the stylus can normally operate.

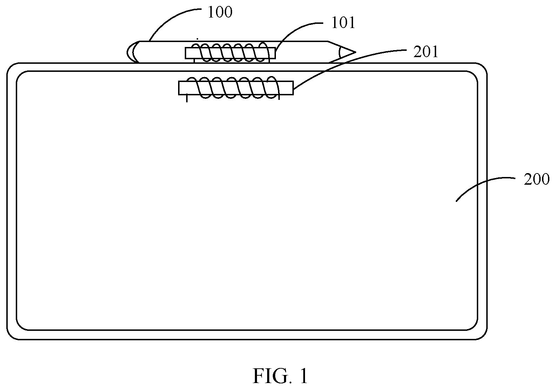

Usually, the battery in the stylus is charged in two charging manners. One manner is wired charging: A charging interface, for example, a Type C interface or a USB interface, is disposed on the stylus, and the charging interface of the stylus is connected to a power supply device, for example, an adapter, by using a charging cable, to charge the battery in the stylus. However, the wired charging manner affects integrity and aesthetics of an appearance of the stylus. Therefore, most styluses use a wireless charging manner. As shown in FIG. 1, a transmit coil 201 is disposed in a terminal device 200, and a receive coil 101 is disposed in a stylus 100. After the stylus 100 is adsorbed on a surface on a top side of the terminal device 200, an interface exists between the stylus 100 and the terminal device 200, the transmit coil 201 is located on one side of the interface, and the receive coil 101 is located on the other side of the interface. When wireless charging is performed, the transmit coil 201 provides an alternating electromagnetic field, and the receive coil 101 generates an alternating current electrical signal by inducing the alternating electromagnetic field, to charge a battery disposed in the stylus 100.

The transmit coil 201 and the receive coil 101 each are a solenoid that has a magnetic core. When the stylus 100 is adsorbed on the surface on the top side of the terminal device 200 to perform wireless charging, the magnetic core in the transmit coil 201 and the magnetic core in the receive coil 101 are disposed in parallel. A large part of a magnetic field emitted from and entering two end faces of the magnetic core in the transmit coil 201 separately is leaked out into an environment, and only a small part of the magnetic field is coupled by the receive coil 101. Consequently, a coupling coefficient between the transmit coil 201 and the receive coil 101 during charging is low, and further, wireless charging efficiency is low.

Based on this, an embodiment of this application provides a wireless charging system, to increase a coupling coefficient between a transmit coil in a wireless charging device and a receive coil in a stylus during charging, and further improve wireless charging efficiency. The wireless charging system provided in this embodiment of this application includes a wireless charging device and a stylus, and the wireless charging device may be a terminal device, a wireless charging stylus box, or the like.

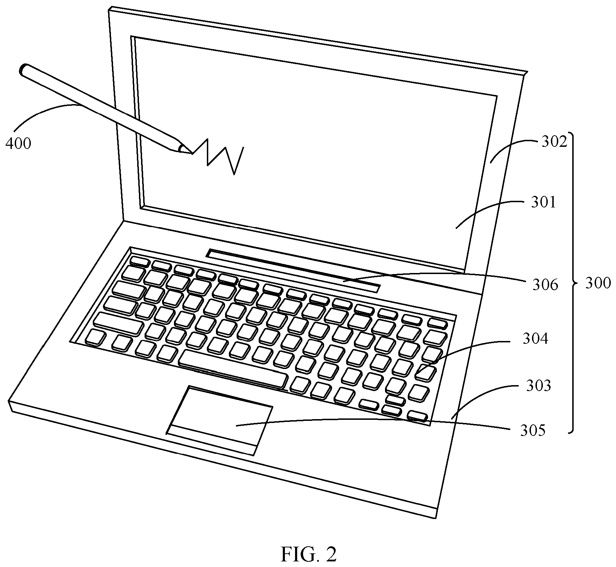

FIG. 2 is a schematic diagram of a scenario to which an embodiment of this application is applicable. Refer to FIG. 2. The scenario includes a terminal device 300 and a stylus 400. In FIG. 2, an example in which the terminal device 300 is a notebook computer is used for description. The stylus 400 may provide an input to the terminal device 300, and the terminal device 300 performs, based on the input of the stylus 400, an operation in response to the input. In an embodiment, the stylus 400 and the terminal device 300 may be interconnected by using a communication network, to implement wireless signal interaction. The communication network may be, but is not limited to, a short-range communication network, for example, a WI-Fihotspot network, a WI-FiF peer-to-peer (peer-to-peer, P2P) network, a Bluetooth network, a zigbee network, or a near field communication (near field communication, NFC) network.

The stylus 400 may be, but is not limited to, an inductive stylus ora capacitive stylus. The terminal device 300 has a touch control screen 301. When the stylus 400 is an inductive stylus, an electromagnetic induction panel needs to be integrated on the touch control screen 301 of the terminal device 300 interacting with the stylus 400. A coil is distributed on the electromagnetic induction panel, and a coil is also integrated in the inductive stylus. According to an electromagnetic induction principle, the inductive stylus can accumulate electric energy with movement of the inductive stylus in a magnetic field range generated by the electromagnetic induction panel. The inductive stylus can transmit the accumulated electric energy to the electromagnetic induction panel through the coil in the inductive stylus and free oscillation. The electromagnetic induction panel can scan the coil on the electromagnetic induction panel based on the electric energy from the inductive stylus, and calculate a location of the inductive stylus on the touch control screen 301. The touch control screen 301 in the terminal device 300 may also be referred to as a touch screen, and the stylus 400 may also be referred to as a handwriting pen.

The capacitive stylus may be a passive capacitive stylus or an active capacitive stylus.

One or more electrodes may be disposed in the active capacitive stylus (for example, in a stylus tip), and the active capacitive stylus can transmit a signal by using the electrode. When the stylus 400 is an active capacitive stylus, an electrode array needs to be integrated on the touch control screen 301 of the terminal device 300 interacting with the stylus 400. In an embodiment, the electrode array may be a capacitive electrode array. The terminal device 300 can receive a signal from the active capacitive stylus by using the electrode array, and identify, when receiving the signal, a location of the active capacitive stylus on the touch control screen and an inclination angle of the active capacitive stylus based on a change in a capacitance value on the touch control screen 301.

In addition, the terminal device 300 further includes a first housing 302, a second housing 303, a keyboard 304, a touch control region 305, and a first accommodating groove 306. The touch control screen 301 is mounted on the first housing 302, the first housing 302 is movably connected to the second housing 303, both the keyboard 304 and the touch control region 305 are disposed on the second housing 303, and the first accommodating groove 306 may also be disposed on the second housing 303.

The first accommodating groove 306 is configured to accommodate the stylus 400, so that the stylus 400 is placed in the first accommodating groove 306 of the terminal device 300 when an input operation is performed on the touch control screen 301 without using the stylus 400, to accommodate the stylus 400. In addition, a first transmit coil may be disposed in the second housing 303, and a first receive coil may be disposed in the stylus 400. After the stylus 400 is placed in the first accommodating groove 306 of the terminal device 300, the terminal device 300 can charge the stylus 400 based on the first transmit coil in the second housing 303 and the first receive coil in the stylus 400.

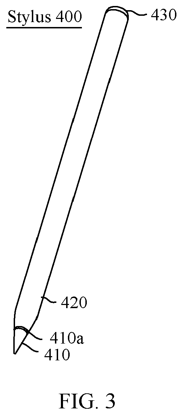

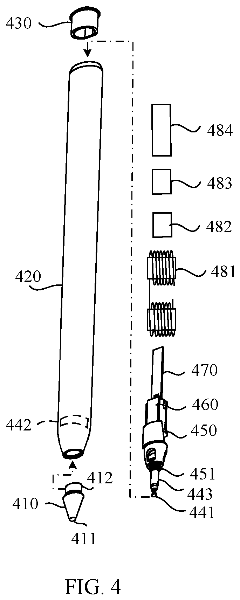

FIG. 3 is a schematic diagram of a structure of a stylus according to an embodiment of this application. Refer to FIG. 3. The stylus 400 may include a stylus tip 410, a stylus rod 420, and a back cover 430. An interior of the stylus rod 420 is of a hollow structure, the stylus tip 410 and the back cover 430 are respectively located on two ends of the stylus rod 420, and the back cover 430 and the stylus rod 420 may be connected in a plug-in or clamping manner. For a fitting relationship between the stylus tip 410 and the stylus rod 420, refer to descriptions of FIG. 4.

FIG. 4 is a schematic diagram of a partially split structure of a stylus according to an embodiment of this application. Refer to FIG. 4. The stylus 400 further includes a main shaft component 450. The main shaft component 450 is located in the stylus rod 420, and the main shaft component 450 is slidably disposed in the stylus rod 420. The main shaft component 450 has an external thread 451, and the stylus tip 410 includes a writing end 411 and a connecting end 412. The connecting end 412 of the stylus tip 410 has an internal thread (not shown) fitting the external thread 451.

When the main shaft component 450 is assembled into the stylus rod 420, the connecting end 412 of the stylus tip 410 extends into the stylus rod 420 and is threadedly connected to the external thread 451 of the main shaft component 450. In some other examples, the connecting end 412 of the stylus tip 410 may alternatively be connected to the main shaft component 450 in a detachable manner, for example, through clamping. The connecting end 412 of the stylus tip 410 is detachably connected to the main shaft component 450, to implement replacement of the stylus tip 410.

Refer to FIG. 3. To detect a pressure applied to the writing end 411 of the stylus tip 410, there is a gap 410a between the stylus tip 410 and the stylus rod 420. This can ensure that the stylus tip 410 can move toward the stylus rod 420 when the writing end 411 of the stylus tip 410 is subjected to an external force, and movement of the stylus tip 410 drives the main shaft component 450 to move in the stylus rod 420. Refer to FIG. 4. A pressure sensing component 460 is disposed on the main shaft component 450 to detect the external force. A part of the pressure sensing component 460 is fixedly connected to a fastening structure in the stylus rod 420, and a part of the pressure sensing component 460 is fixedly connected to the main shaft component 450. In this way, when the main shaft component 450 moves with the stylus tip 410, because a part of the pressure sensing component 460 is fixedly connected to the fastening structure in the stylus rod 420, movement of the main shaft component 450 drives the pressure sensing component 460 to deform, and deformation of the pressure sensing component 460 is transmitted to a circuit board 470 (for example, the pressure sensing component 460 and the circuit board 470 can be electrically connected by using a wire or a flexible circuit board). The circuit board 470 detects the pressure on the writing end 411 of the stylus tip 410 based on the deformation of the pressure sensing component 460, and therefore controls a line thickness of the writing end 411 based on the pressure on the writing end 411 of the stylus tip 410.

It should be noted that pressure detection on the stylus tip 410 includes but is not limited to the foregoing method. For example, a pressure sensor may alternatively be disposed in the writing end 411 of the stylus tip 410, and the pressure on the stylus tip 410 is detected by using the pressure sensor.

Refer to FIG. 4. In this embodiment, the stylus 400 further includes a plurality of electrodes. The plurality of electrodes may be, for example, a first transmitting electrode 441, a ground electrode 443, and a second transmitting electrode 442. The first transmitting electrode 441, the ground electrode 443, and the second transmitting electrode 442 are all electrically connected to the circuit board 470. The first transmitting electrode 441 may be located in the stylus tip 410 and close to the writing end 411. The circuit board 470 may be configured as a control board that can separately provide a signal to the first transmitting electrode 441 and the second transmitting electrode 442. The first transmitting electrode 441 is configured to transmit a first signal. When the first transmitting electrode 441 is close to the touch control screen 301 of the terminal device 300, a coupling capacitor may be formed between the first transmitting electrode 441 and the touch control screen 301 of the terminal device 300. In this way, the terminal device 300 can receive the first signal. The second transmitting electrode 442 is configured to transmit a second signal, and the terminal device 300 can determine the inclination angle of the stylus 400 based on the received second signal. In this embodiment of this application, the second transmitting electrode 442 may be located on an inner wall of the stylus rod 420. In an example, the second transmitting electrode 442 may alternatively be located on the main shaft component 450.

The ground electrode 443 may be located between the first transmitting electrode 441 and the second transmitting electrode 442, or the ground electrode 443 may be located at an outer periphery of the first transmitting electrode 441 and the second transmitting electrode 442, and the ground electrode 443 is configured to reduce coupling between the first transmitting electrode 441 and the second transmitting electrode 442.

When the terminal device 300 receives the first signal from the stylus 400, a capacitance value at a corresponding location on the touch control screen 301 changes. Based on this, the terminal device 300 can determine the location of the stylus 400 (or the stylus tip of the stylus 400) on the touch control screen 301 based on the change in the capacitance value on the touch control screen 301. In addition, the terminal device 300 may obtain the inclination angle of the stylus 400 by using a double-tip projection method in an inclination angle detection algorithm. Because locations of the first transmitting electrode 441 and the second transmitting electrode 442 in the stylus 400 are different, when the terminal device 300 receives the first signal and the second signal from the stylus 400, capacitance values at the two locations on the touch control screen 301 change. The terminal device 300 may obtain the inclination angle of the stylus 400 based on a distance between the first transmitting electrode 441 and the second transmitting electrode 442 and a distance between the two locations in which the capacitance values on the touch control screen 301 change. For more detailed descriptions of obtaining the inclination angle of the stylus 400, refer to related descriptions of the double-tip projection method in the conventional technology.

Refer to FIG. 4. In this embodiment of this application, the stylus 400 further includes a first receive coil 481, a first Rx chip 482, a charging management chip 483, and a first battery 484. The first receive coil 481, the first Rx chip 482, the charging management chip 483, and the first battery 484 are sequentially connected. The first Rx chip 482 and the charging management chip 483 may be disposed on the circuit board 470. The first battery 484 is configured to supply power to the circuit board 470. Certainly, one circuit board may alternatively be separately added to the stylus rod 420 of the stylus 400, and the first Rx chip 482 and the charging management chip 483 are disposed on the added circuit board. The first battery 484 is a rechargeable battery, for example, a lithium-ion battery. The stylus 400 may wirelessly charge the first battery 484 based on the first receive coil 481, the first Rx chip 482, and the charging management chip 483 that are included in the stylus 400.

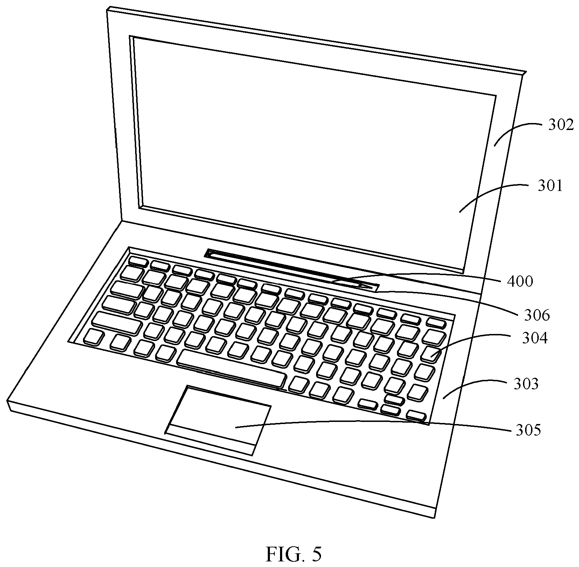

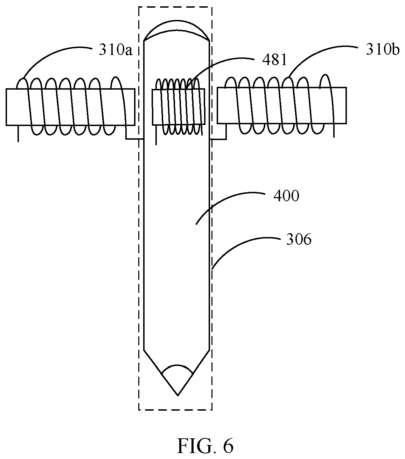

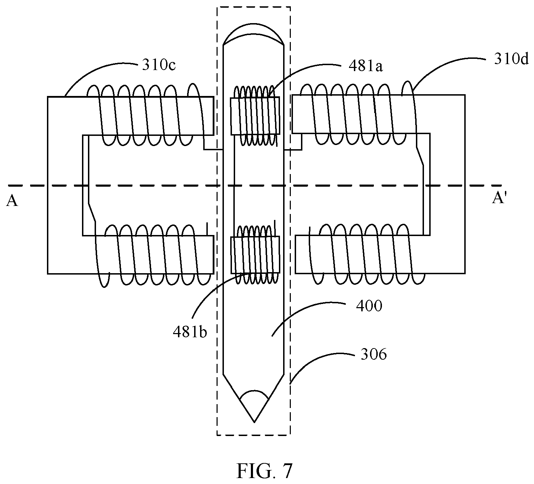

FIG. 5 is a schematic diagram of accommodating a stylus in an accommodating groove of a terminal device according to an embodiment of this application. Refer to FIG. 5. In some embodiments, the stylus 400 may be placed in the first accommodating groove 306 of the terminal device 300 to charge the first battery 484 in the stylus 400. In this case, the wireless charging device is the terminal device 300 shown in FIG. 2. After the stylus 400 is placed in the first accommodating groove 306 of the terminal device 300, for a location relationship between the first transmit coil 310 disposed in the terminal device 300 and the stylus 400, refer to descriptions of FIG. 6 and FIG. 7. Schematic diagrams shown in FIG. 6 and FIG. 7 are top views in a direction from an opening of the first accommodating groove 306 to a groove bottom of the first accommodating groove 306.

Refer to FIG. 6 and FIG. 7. The stylus 400 includes a first receive coil 481 disposed in the stylus rod 420, the terminal device 300 includes a first transmit coil 310 disposed in the second housing 303, the second housing 303 has a first accommodating groove 306, the first transmit coil 310 is located outside the first accommodating groove 306, and the first transmit coil 310 and the first receive coil 481 each are a solenoid that has a magnetic core, and each are formed by winding at least one turn of coil on the magnetic core.

Refer to FIG. 6. There may be one first receive coil 481 in the stylus 400, that is, the first receive coil 481 is formed by winding a coil on one magnetic core. In addition, a shape of the magnetic core in the first receive coil 481 is a columnar structure, the magnetic core in the first receive coil 481 has two end faces that are disposed opposite and parallel to each other, and both the two end faces of the magnetic core in the first receive coil 481 face a sidewall of the stylus rod 420. A length direction of the stylus rod 420 of the stylus 400 is referred to as a first direction, a direction in which one end face of the magnetic core in the first receive coil 481 points to the other end face of the magnetic core is referred to as a second direction, and the first direction is perpendicular to the second direction. A process error is unavoidable. Therefore, "parallel" described above should be understood as parallel disposition within an allowable range of the process error, and "perpendicular" described above should be understood as "perpendicular" within an allowable range of the process error.

As shown in FIG. 6, there may be two first transmit coils 310 in the terminal device 300, and a shape of the magnetic core in each first transmit coil 310 is also a columnar structure. One columnar transmit coil is located on a first side outside the first accommodating groove 306, and the other columnar transmit coil is located on a second side outside the first accommodating groove 306. The first side and the second side are disposed opposite to each other. The two columnar transmit coils are connected in series, that is, one end of a coil wound on the magnetic core included in the columnar transmit coil disposed on the first side is connected to one end of a coil wound on the magnetic core included in the columnar transmit coil disposed on the second side.

The columnar transmit coil located on the first side of the first accommodating groove 306 may be referred to as a first columnar transmit coil 310a, and the columnar transmit coil located on the second side of the first accommodating groove 306 may be referred to as a second columnar transmit coil 310b. The first side is one side that is of the first accommodating groove 306 and that faces the keyboard 304, and the second side is one side that is of the first accommodating groove 306 and that is away from the keyboard 304.

For example, as shown in FIG. 6, the first side may be a left side of the first accommodating groove 306 in FIG. 6, and the second side may be a right side of the first accommodating groove 306 in FIG. 6. One end that is of the coil wound in the first columnar transmit coil 310a and that is close to the first accommodating groove 306 (for example, a right end of the coil wound in the first columnar transmit coil 310a in FIG. 6) is connected to one end that is of the coil wound in the second columnar transmit coil 310b and that is close to the first accommodating groove 306 (for example, a left end of the coil wound in the second columnar transmit coil 310b in FIG. 6).

Certainly, it may be understood that a manner of connecting the two columnar transmit coils in series is not limited to the connection manner shown in FIG. 6, provided that one end of the coil wound in the first columnar transmit coil 310a is connected to one end of the coil wound in the second columnar transmit coil 310b. For example, one end that is of the coil wound in the first columnar transmit coil 310a and that is away from the first accommodating groove 306 (for example, a left end of the coil wound in the first columnar transmit coil 310a in FIG. 6) may alternatively be connected to one end that is of the coil wound in the second columnar transmit coil 310b and that is away from the first accommodating groove 306 (for example, a right end of the coil wound in the second columnar transmit coil 310b in FIG. 6).

In addition, winding directions of the coils wound in the two series-connected columnar transmit coils are the same, that is, winding directions of the first columnar transmit coil 310a and the second columnar transmit coil 310b are the same, thereby avoiding a problem that generated magnetic fluxes cancel each other because the winding directions of the coils wound in the two series-connected columnar transmit coils are opposite. For example, both the winding directions of the coils wound in the two series-connected columnar transmit coils are clockwise or counterclockwise.

Actually, the magnetic core in each columnar transmit coil has two end faces that are disposed opposite and parallel to each other, one end face of the magnetic core in each columnar transmit coil faces the first accommodating groove 306, and the other end face of the magnetic core in each columnar transmit coil is away from the first accommodating groove 306.

Optionally, orthographic projections of the two end faces of the magnetic core in each columnar transmit coil may completely coincide with each other in a third direction. In this case, areas of the two end faces of the magnetic core in each columnar transmit coil are equal, and an extension direction of the magnetic core in the columnar transmit coil is parallel to the third direction. Alternatively, for the magnetic core in each columnar transmit coil, an orthographic projection that is of the end face facing the first accommodating groove 306 and that is in a third direction covers an orthographic projection that is of the end face away from the first accommodating groove 306 and that is in the third direction. In this case, an area of the end face facing the first accommodating groove 306 is greater than an area of the end face away from the first accommodating groove 306, and an extension direction of the magnetic core in the columnar transmit coil is parallel to the third direction. Alternatively, for the magnetic core in each columnar transmit coil, an orthographic projection that is of the end face facing the first accommodating groove 306 and that is in a third direction is located in an orthographic projection that is of the end face away from the first accommodating groove 306 and that is in the third direction. In this case, an area of the end face facing the first accommodating groove 306 is less than an area of the end face away from the first accommodating groove 306, and an extension direction of the magnetic core in the columnar transmit coil is parallel to the third direction. Alternatively, orthographic projections of the two end faces of the magnetic core in each columnar transmit coil partially coincide with each other in a third direction. In this case, an included angle between an extension direction of the magnetic core in the columnar transmit coil and the third direction is not 0, and areas of the two end faces of the magnetic core in the columnar transmit coil may be equal or unequal.

The third direction is a direction in which the first side of the first accommodating groove 306 points to the second side of the first accommodating groove 306, and the third direction is also a direction in which the columnar transmit coil points to the first accommodating groove 306, for example, a direction in which the first columnar transmit coil 310a points to the first accommodating groove 306, or a direction in which the second columnar transmit coil 310b points to the first accommodating groove 306. In this embodiment of this application, area sizes of the two end faces of the magnetic core in the columnar transmit coil and a specific angle value of the included angle between the extension direction of the magnetic core in the columnar transmit coil and the third direction are not limited.

After the stylus 400 is placed in the first accommodating groove 306, the end face that is of the magnetic core in the columnar transmit coil and that faces the first accommodating groove 306 and an end face that is of the magnetic core in the first receive coil 481 and that faces the columnar transmit coil coupled to the first receive coil 481 have at least regions partially disposed directly opposite to each other. In other words, the orthographic projection, in the third direction, of the end face that is of the magnetic core in the columnar transmit coil and that faces the first accommodating groove 306 and an orthographic projection, in the third direction, of the end face that is of the magnetic core in the first receive coil 481 and that faces the columnar transmit coil coupled to the first receive coil 481 have at least regions that partially coincide with each other. After the stylus 400 is placed in the first accommodating groove 306, a second direction in which one end face of the magnetic core in the first receive coil 481 points to the other end face of the magnetic core and the third direction in which the first side of the first accommodating groove 306 points to the second side of the first accommodating groove 306 are a same direction.

For example, after the stylus 400 is placed in the first accommodating groove 306, the end face that is of the magnetic core in the first columnar transmit coil 310a and that faces the first accommodating groove 306 and an end face that is of the magnetic core in the first receive coil 481 and that faces the first columnar transmit coil 310a have at least regions partially disposed directly opposite to each other, and the end face that is of the magnetic core in the second columnar transmit coil 310b and that faces the first accommodating groove 306 and an end face that is of the magnetic core in the first receive coil 481 and that faces the second columnar transmit coil 310b have at least regions partially disposed directly opposite to each other.

Optionally, after the stylus 400 is placed in the first accommodating groove 306, the end face that is of the magnetic core in the columnar transmit coil and that faces the first accommodating groove 306 is completely disposed directly opposite to the end face that is of the magnetic core in the first receive coil 481 and that faces the columnar transmit coil coupled to the first receive coil 481. In other words, the orthographic projection, in the third direction, of the end face that is of the magnetic core in the columnar transmit coil and that faces the first accommodating groove 306 covers at least the orthographic projection, in the third direction, of the end face that is of the magnetic core in the first receive coil 481 and that faces the columnar transmit coil coupled to the first receive coil 481.

In some implementations, after the stylus 400 is placed in the first accommodating groove 306, the orthographic projection, in the third direction, of the end face that is of the magnetic core in the first columnar transmit coil 310a and that faces the first accommodating groove 306 completely coincides with an orthographic projection, in the third direction, of an end face that is of the magnetic core in the first receive coil 481 and that faces the first columnar transmit coil 310a. In this case, the area of the end face that is of the magnetic core in the first columnar transmit coil 310a and that faces the first accommodating groove 306 is equal to an area of the end face that is of the magnetic core in the first receive coil 481 and that faces the first columnar transmit coil 310a. In some other implementations, after the stylus 400 is placed in the first accommodating groove 306, in addition to covering the orthographic projection, in the third direction, of the end face that is of the magnetic core in the first receive coil 481 and that faces the first columnar transmit coil 310a, the orthographic projection, in the third direction, of the end face that is of the magnetic core in the first columnar transmit coil 310a and that faces the first accommodating groove 306 further covers an orthographic projection, in the third direction, of another part other than the end face that is of the first receive coil 481 and that faces the first columnar transmit coil 310a. For example, the orthographic projection, in the third direction, of the end face that is of the magnetic core in the first columnar transmit coil 310a and that faces the first accommodating groove 306 further covers an orthographic projection that is in the third direction and that is of the coil wound on the magnetic core in the first receive coil 481 and an orthographic projection that is in the third direction and that is of a region in which the first receive coil 481 is not disposed in the stylus rod 420 of the stylus 400. In this case, the area of the end face that is of the magnetic core in the first columnar transmit coil 310a and that faces the first accommodating groove 306 is greater than the area of the end face that is of the magnetic core in the first receive coil 481 and that faces the first columnar transmit coil 310a.

Correspondingly, after the stylus 400 is placed in the first accommodating groove 306, the orthographic projection, in the third direction, of the end face that is of the magnetic core in the second columnar transmit coil 310b and that faces the first accommodating groove 306 completely coincides with an orthographic projection, in the third direction, of an end face that is of the magnetic core in the first receive coil 481 and that faces the second columnar transmit coil 310b. In this case, the area of the end face that is of the magnetic core in the second columnar transmit coil 310b and that faces the first accommodating groove 306 is equal to an area of the end face that is of the magnetic core in the first receive coil 481 and that faces the second columnar transmit coil 310b. Alternatively, after the stylus 400 is placed in the first accommodating groove 306, in addition to covering the orthographic projection, in the third direction, of the end face that is of the magnetic core in the first receive coil 481 and that faces the second columnar transmit coil 310b, the orthographic projection, in the third direction, of the end face that is of the magnetic core in the second columnar transmit coil 310b and that faces the first accommodating groove 306 further covers an orthographic projection, in the third direction, of another part other than the end face that is of the first receive coil 481 and that faces the second columnar transmit coil 310b. In this case, the area of the end face that is of the magnetic core in the second columnar transmit coil 310b and that faces the first accommodating groove 306 is greater than the area of the end face that is of the magnetic core in the first receive coil 481 and that faces the second columnar transmit coil 310b.

In some embodiments, a ratio of an area of any end face of the magnetic core in the first receive coil 481 to the area of the end face that is of the magnetic core in the columnar transmit coil coupled to the first receive coil 481 and that faces the first accommodating groove 306 is 0.8 to 1. To be specific, a ratio of the area of the end face that is of the magnetic core in the first receive coil 481 and that faces the first columnar transmit coil 310a to the area of the end face that is of the magnetic core in the first columnar transmit coil 310a and that faces the first accommodating groove 306 is 0.8 to 1; and a ratio of the area of the end face that is of the magnetic core in the first receive coil 481 and that faces the second columnar transmit coil 310b to the area of the end face that is of the magnetic core in the second columnar transmit coil 310b and that faces the first accommodating groove 306 is 0.8 to 1.

After the stylus 400 is placed in the first accommodating groove 306, when the end face that is of the magnetic core in the columnar transmit coil and that faces the first accommodating groove 306 and the end face that is of the magnetic core in the first receive coil 481 and that faces the first transmit coil coupled to the first receive coil 481 have at least regions partially disposed directly opposite to each other, a magnetic field generated by the columnar transmit coil is emitted from and enters the two end faces of the magnetic core separately, a large part of the magnetic field emitted from or entering the end face that is of the magnetic core in the columnar transmit coil and that faces the first accommodating groove 306 is coupled by the first receive coil 481, thereby increasing a coupling coefficient between the columnar transmit coil and the first receive coil 481, and improving wireless charging efficiency.

It should be noted that, in FIG. 6, the terminal device 300 includes two series-connected columnar transmit coils, which are respectively the first columnar transmit coil 310a and the second columnar transmit coil 310b. In an actual manufacturing process, only the first columnar transmit coil 310a may be disposed on the first side outside the first accommodating groove 306. In this case, there is one columnar transmit coil in the terminal device 300. Alternatively, only the second columnar transmit coil 310b may be disposed on the second side outside the first accommodating groove 306. In this case, there is one columnar transmit coil in the terminal device 300.

Refer to FIG. 7. There may be two first receive coils 481 in the stylus 400, that is, two solenoids that each have a magnetic core are formed by respectively winding coils on the two magnetic cores. The two first receive coils 481 are distributed in a length direction of the stylus 400 and are connected in series.

A shape of the magnetic core in each first receive coil 481 is a columnar structure. A first receive coil 481 that is in the stylus 400 and that is away from the stylus tip 410 may be referred to as a first columnar receive coil 481a, a first receive coil 481 that is in the stylus 400 and that faces the stylus tip 410 is referred to as a second columnar receive coil 481b, and one end of the coil wound in the first columnar receive coil 481a is connected to one end of the coil wound in the second columnar receive coil 481b.

For example, as shown in FIG. 7, a left end of the coil wound in the first columnar receive coil 481a is connected to a left end of the coil wound in the second columnar receive coil 481b. Certainly, a right end of the coil wound in the first columnar receive coil 481a may alternatively be connected to a right end of the coil wound in the second columnar receive coil 481b, to connect the first columnar receive coil 481a and the second columnar receive coil 481b in series. In this embodiment of this application, the end of each of the coils connected when the two first receive coils 481 are connected in series is not limited.

In addition, winding directions of the coils wound in the two series-connected first receive coils 481 are the same. In other words, winding directions of the first columnar receive coil 481a and the second columnar receive coil 481b are the same. For example, both the winding directions of the coils wound in the two series-connected first receive coils 481 are clockwise or counterclockwise.

Actually, the magnetic core in each first receive coil 481 has two end faces that are disposed opposite and parallel to each other, and both the two end faces of the magnetic core in each first receive coil 481 face the sidewall of the stylus rod 420. Areas of the two end faces of the magnetic core in each first receive coil 481 may be equal or unequal. The length direction (namely, a distribution direction of the two first receive coils 481) of the stylus rod 420 of the stylus 400 is referred to as a first direction, a direction in which one end face of the magnetic core in the first receive coil 481 points to the other end face of the magnetic core is referred to as a second direction, and the first direction is perpendicular to the second direction.

As shown in FIG. 7, there may be two first transmit coils 310 in the terminal device 300, and a shape of the magnetic core in each first transmit coil 310 is a U shape. One U-shaped transmit coil is located on the first side outside the first accommodating groove 306, and the other U-shaped transmit coil is located on the second side outside the first accommodating groove 306. The first side and the second side are disposed opposite to each other, and the two U-shaped transmit coils are connected in series.

The magnetic core in the U-shaped transmit coil includes two side parts and one bottom, and the two side parts of the magnetic core in the U-shaped transmit coil are disposed in parallel. The two side parts and the bottom of the magnetic core in the U-shaped transmit coil each may be of a planar structure, and the bottom of the magnetic core in the U-shaped transmit coil may be disposed perpendicular to the two side parts. Alterna tively, the two side parts of the magnetic core in the U-shaped transmit coil each are of a planar structure, the bottom of the magnetic core in the U-shaped transmit coil is of a curved surface structure, and the bottom of the magnetic core in the U-shaped transmit coil may be bent in a direction away from the first accommodating groove 306. An extension direction of the two side parts of the magnetic core in the U-shaped transmit coil is the third direction. The third direction may be a direction in which the first side of the first accommodating groove 306 points to the second side of the first accommodating groove 306, or the third direction may be a direction in which the U-shaped transmit coil points to the first accommodating groove 306.

The U-shaped transmit coil located on the first side of the first accommodating groove 306 may be referred to as a first U-shaped transmit coil 310c, and the U-shaped transmit coil located on the second side of the first accommodating groove 306 may be referred to as a second U-shaped transmit coil 310d. The first side is one side that is of the first accommodating groove 306 and that faces the keyboard 304, and the second side is one side that is of the first accommodating groove 306 and that is away from the keyboard 304. One end of a coil wound in the first U-shaped transmit coil 310c is connected to one end of a coil wound in the second U-shaped transmit coil 310d, to connect the two U-shaped transmit coils in series.

For example, as shown in FIG. 7, the first side may be a left side of the first accommodating groove 306 in FIG. 7, the second side may be a right side of the first accommodating groove 306 in FIG. 7, and a right end of the coil wound on an upper side part of the magnetic core in the first U-shaped transmit coil 310c is connected to a left end of the coil wound on an upper side part of the magnetic core in the second U-shaped transmit coil 310d. Certainly, a right end of the coil wound on a lower side part of the magnetic core in the first U-shaped transmit coil 310c may alternatively be connected to a left end of the coil wound on a lower side part of the magnetic core in the second U-shaped transmit coil 310d.

In addition, winding directions of the coils wound in the two series-connected U-shaped transmit coils are the same, and winding directions of the coil wound on the two side parts of the magnetic core in each U-shaped transmit coil are the same, thereby avoiding a problem that generated magnetic fluxes cancel each other because the winding directions of the coils wound in the two series-connected U-shaped transmit coils are opposite. For example, the winding directions of the coils wound in the two series-connected U-shaped transmit coils and the winding directions of the coil wound on the two side parts of the magnetic core in the U-shaped transmit coil are all clockwise or counterclockwise.

It should be noted that for the magnetic core in the U-shaped transmit coil, the coil is wound on both the two side parts of the magnetic core, and the coil may be or may not be wound on the bottom of the magnetic core. This is not limited in this embodiment of this application.

Actually, the two side parts of the magnetic core in each U-shaped transmit coil each have one end face, both the two end faces of each U-shaped transmit coil face the first accommodating groove 306, and the two end faces of each U-shaped transmit coil are disposed in parallel. Optionally, the two end faces of each U-shaped transmit coil are located on a same plane.

Areas of the two end faces of the magnetic core in each U-shaped transmit coil may be equal or unequal. This is not limited in this embodiment of this application.

After the stylus 400 is placed in the first accommodating groove 306, one of the two end faces of the magnetic core in the U-shaped transmit coil and one of end faces that are of the magnetic cores in the two series-connected first receive coils 481 and that face the U-shaped transmit coil coupled to the two series-connected first receive coils 481 have at least regions partially disposed directly opposite to each other. In other words, one of orthographic projections that are in the third direction and that are of the two end faces of the magnetic core in the U-shaped transmit coil and one of orthographic projections, in the third direction, of the end faces that are of the magnetic cores in the two series-connected first receive coils 481 and that face the U-shaped transmit coil coupled to the two series-connected first receive coils 481 have at least regions that partially coincide with each other.

For example, after the stylus 400 is placed in the first accommodating groove 306, in each U-shaped transmit coil, a side part that is of the magnetic core and that is away from the stylus tip 410 is referred to as a first side part, and a side part that is of the magnetic core and that faces the stylus tip 410 is referred to as a second side part. An end face of the first side part of the magnetic core in the first U-shaped transmit coil 310c and an end face that is of the magnetic core in the first columnar receive coil 481a and that faces the first U-shaped transmit coil 310c have at least regions partially disposed directly opposite to each other; an end face of the second side part of the magnetic core in the first U-shaped transmit coil 310c and an end face that is of the magnetic core in the second columnar receive coil 481b and that faces the first U-shaped transmit coil 310c have at least regions partially disposed directly opposite to each other; an end face of the first side part of the magnetic core in the second U-shaped transmit coil 310d and an end face that is of the magnetic core in the first columnar receive coil 481a and that faces the second U-shaped transmit coil 310d have at least regions partially disposed directly opposite to each other; and an end face of the second side part of the magnetic core in the second U-shaped transmit coil 310d and an end face that is of the magnetic core in the second columnar receive coil 481b and that faces the second U-shaped transmit coil 310d have at least regions partially disposed directly opposite to each other.

Optionally, after the stylus 400 is placed in the first accommodating groove 306, the two end faces of the magnetic core in the U-shaped transmit coil are respectively completely disposed directly opposite to the end faces that are of the magnetic cores in the two series-connected first receive coils 481 and that face the U-shaped transmit coil coupled to the two series-connected first receive coils 481. In other words, the orthographic projections that are in the third direction and that are of the two end faces of the magnetic core in the U-shaped transmit coil cover at least the orthographic projections, in the third direction, of the end faces that are of the magnetic cores in the two series-connected first receive coils 481 and that face the U-shaped transmit coil coupled to the two series-connected first receive coils 481.

In some implementations, after the stylus 400 is placed in the first accommodating groove 306, an orthographic projection that is in the third direction and that is of the end face of the first side part of the magnetic core in the first U-shaped transmit coil 310c may completely coincide with an orthographic projection, in the third direction, of the end face that is of the magnetic core in the first columnar receive coil 481a and that faces the first U-shaped transmit coil 310c. In this case, an area of the end face of the first side part of the magnetic core in the first U-shaped transmit coil 310c is equal to an area of the end face that is of the magnetic core in the first columnar receive coil 481a and that faces the first U-shaped transmit coil 310c. In some other implementations, after the stylus 400 is placed in the first accommodating groove 306, in addition to covering the orthographic projection, in the third direction, of the end face that is of the magnetic core in the first columnar receive coil 481a and that faces the first U-shaped transmit coil 310c, the orthographic projection that is in the third direction and that is of the end face of the first side part of the magnetic core in the first U-shaped transmit coil 310c further covers an orthographic projection, in the third direction, of another part other than the end face that is of the first columnar receive coil 481a and that faces the first U-shaped transmit coil 3 10c. In this case, the area of the end face of the first side part of the magnetic core in the first U-shaped transmit coil 310c is greater than the area of the end face that is of the magnetic core in the first columnar receive coil 481a and that faces the first U-shaped transmit coil 310c.

Correspondingly, after the stylus 400 is placed in the first accommodating groove 306, an orthographic projection that is in the third direction and that is of the end face of the second side part of the magnetic core in the first U-shaped transmit coil 310c may completely coincide with an orthographic projection, in the third direction, of the end face that is of the magnetic core in the second columnar receive coil 481b and that faces the first U-shaped transmit coil 310c. In this case, an area of the end face of the second side part of the magnetic core in the first U-shaped transmit coil 310c is equal to an area of the end face that is of the magnetic core in the second columnar receive coil 481b and that faces the first U-shaped transmit coil 310c. Alternatively, after the stylus 400 is placed in the first accommodating groove 306, in addition to covering the orthographic projection, in the third direction, of the end face that is of the magnetic core in the second columnar receive coil 481b and that faces the first U-shaped transmit coil 310c, the orthographic projection that is in the third direction and that is of the end face of the second side part of the magnetic core in the first U-shaped transmit coil 310c further covers an orthographic projection, in the third direction, of another part other than the end face that is of the second columnar receive coil 481b and that faces the first U-shaped transmit coil 310c. In this case, the area of the end face of the second side part of the magnetic core in the first U-shaped transmit coil 310c is greater than the area of the end face that is of the magnetic core in the second columnar receive coil 481b and that faces the first U-shaped transmit coil 310c.

After the stylus 400 is placed in the first accommodating groove 306, an orthographic projection that is in the third direction and that is of the end face of the first side part of the magnetic core in the second U-shaped transmit coil 310d may completely coincide with an orthographic projection, in the third direction, of the end face that is of the magnetic core in the first columnar receive coil 481a and that faces the second U-shaped transmit coil 310d. In this case, an area of the end face of the first side part of the magnetic core in the second U-shaped transmit coil 310d is equal to an area of the end face that is of the magnetic core in the first columnar receive coil 481a and that faces the second U-shaped transmit coil 310d. Alternatively, after the stylus 400 is placed in the first accommodating groove 306, in addition to covering the orthographic projection, in the third direction, of the end face that is of the magnetic core in the first columnar receive coil 481a and that faces the second U-shaped transmit coil 310d, the orthographic projection that is in the third direction and that is of the end face of the first side part of the magnetic core in the second U-shaped transmit coil 310d further covers an orthographic projection, in the third direction, of another part other than the end face that is of the first columnar receive coil 481a and that faces the second U-shaped transmit coil 310d. In this case, the area of the end face of the first side part of the magnetic core in the second U-shaped transmit coil 310d is greater than the area of the end face that is of the magnetic core in the first columnar receive coil 481a and that faces the second U-shaped transmit coil 310d.

After the stylus 400 is placed in the first accommodating groove 306, an orthographic projection that is in the third direction and that is of the end face of the second side part of the magnetic core in the second U-shaped transmit coil 310d may completely coincide with an orthographic projection, in the third direction, of the end face that is of the magnetic core in the second columnar receive coil 481b and that faces the second U-shaped transmit coil 310d. In this case, an area of the end face of the second side part of the magnetic core in the second U-shaped transmit coil 310d is equal to an area of the end face that is of the magnetic core in the second columnar receive coil 481b and that faces the second U-shaped transmit coil 310d. Alternatively, after the stylus 400 is placed in the first accommodating groove 306, in addition to covering the orthographic projection, in the third direction, of the end face that is of the magnetic core in the second columnar receive coil 481b and that faces the second U-shaped transmit coil 310d, the orthographic projection that is in the third direction and that is of the end face of the second side part of the magnetic core in the second U-shaped transmit coil 310d further covers an orthographic projection, in the third direction, of another part other than the end face that is of the second columnar receive coil 481b and that faces the second U-shaped transmit coil 310d. In this case, the area of the end face of the second side part of the magnetic core in the second U-shaped transmit coil 310d is greater than the area of the end face that is of the magnetic core in the second columnar receive coil 481b and that faces the second U-shaped transmit coil 310d.

In some embodiments, a ratio of an area of any end face of the magnetic core in each first receive coil 481 to an area of an end face of a corresponding side part of the magnetic core in the U-shaped transmit coil coupled to the first receive coil 481 is 0.8 to 1. To be specific, a ratio of the area of the end face that is of the magnetic core in the first columnar receive coil 481a and that faces the first U-shaped transmit coil 310c to the area of the end face of the first side part of the magnetic core in the first U-shaped transmit coil 310c is 0.8 to 1; a ratio of the area of the end face that is of the magnetic core in the first columnar receive coil 481a and that faces the second U-shaped transmit coil 310d to the area of the end face of the first side part of the magnetic core in the second U-shaped transmit coil 310d is 0.8 to 1; a ratio of the area of the end face that is of the magnetic core in the second columnar receive coil 481b and that faces the first U-shaped transmit coil 310c to the area of the end face of the second side part of the magnetic core in the first U-shaped transmit coil 310c is 0.8 to 1; and a ratio of the area of the end face that is of the magnetic core in the second columnar receive coil 481b and that faces the second U-shaped transmit coil 310d to the area of the end face of the second side part of the magnetic core in the second U-shaped transmit coil 310d is 0.8 to 1.

It should be noted that, the area of the end face that is of the magnetic core in the first transmit coil 310 and that faces the first accommodating groove 306 is greater than or equal to the area of the end face that is of the magnetic core in the first receive coil 481 and that faces the first transmit coil 310 coupled to the first receive coil 481. On the one hand, because an internal space of the stylus 400 is small, it is difficult to make a large area of the end face of the magnetic core in the first receive coil 481; and because an internal space of the terminal device 300 is large, the area of the end face of the magnetic core in the first transmit coil 310 may be large. On the other hand, because a charging power during wireless charging is mainly determined by the first transmit coil 310, the area of the end face of the magnetic core in the first transmit coil 310 is set to be large, to provide a high charging power for charging.

After the stylus 400 is placed in the first accommodating groove 306, when one of the two end faces of the magnetic core in the U-shaped transmit coil and one of the end faces that are of the magnetic cores in the two series-connected receive coils 481 and that face the U-shaped transmit coil coupled to the two series-connected receive coils 481 have at least regions partially disposed directly opposite to each other, a magnetic field generated by the U-shaped transmit coil is emitted from and enters the end faces of the first side part and the second side part of the magnetic core separately, a large part of the magnetic field emitted from and entering the two end faces of the magnetic core in the U-shaped transmit coil is coupled by the two series-connected first receive coils 481, thereby increasing a coupling coefficient between the U-shaped transmit coil and the first receive coils 481, and improving wireless charging efficiency.

It should be noted that, in FIG. 7, the terminal device 300 includes series-connected U-shaped transmit coils, which are respectively the first U-shaped transmit coil 310c and the second U-shaped transmit coil 310d. In an actual manufacturing process, only the first U-shaped transmit coil 310c may be disposed on the first side outside the first accommodating groove 306. In this case, there is one U-shaped transmit coil in the terminal device 300. Alternatively, only the second U-shaped transmit coil 310d may be disposed on the second side outside the first accommodating groove 306. In this case, there is one U-shaped transmit coil in the terminal device 300.

Certainly, the U-shaped transmit coil in this embodiment of this application may alternatively be replaced with a transmit coil of another shape, provided that it is ensured that both the two end faces of the first transmit coil 310 face the first accommodating groove 306, and the magnetic core between the two end faces is conducted. For example, the U-shaped transmit coil may be replaced with a C-shaped transmit coil, a V-shaped transmit coil, or the like.

In an actual product, the first accommodating groove 306 includes sidewalls that are sequentially connected end to end, a groove bottom that is connected to each sidewall, and an opening. The stylus 400 may be placed in the first accommodating groove 306 through the opening of the first accommodating groove 306, and the opening of the first accommodating groove 306 faces a surface that is in the second housing 303 and that is buckled with the first housing 302. The first accommodating groove 306 may include four sidewalls, which are respectively a first sidewall, a second sidewall, a third sidewall, and a fourth sidewall, where the first sidewall, the third sidewall, the second sidewall, and the fourth sidewall are sequentially connected, the first sidewall and the second sidewall are disposed opposite to each other, the third sidewall and the fourth sidewall are disposed opposite to each other, and the first sidewall and the third sidewall are disposed adjacent to each other.

For example, a sidewall that is in the first accommodating groove 306 and that faces the keyboard 304 is referred to as the first sidewall, a sidewall that is in the first accommodating groove 306 and that is away from the keyboard 304 is referred to as the second sidewall, a sidewall that the back cover 430 of the stylus 400 faces is referred to as the third sidewall, and a sidewall that the stylus tip 410 of the stylus 400 faces is referred to as the fourth sidewall.

In addition, the first sidewall, the second sidewall, the third sidewall, and the fourth sidewall may all be planes, the groove bottom may be a plane, and the groove bottom is perpendicular to all of the first sidewall, the second sidewall, the third sidewall, and the fourth sidewall. Alternatively, the first sidewall, the second sidewall, the third sidewall, the fourth sidewall, and the groove bottom may be curved surfaces, and a curvature of the curved surface may be equal to a curvature of the stylus rod 420 of the stylus 400, or equal to a curvature of each part corresponding to the stylus 400.

Usually, to ensure that the stylus 400 can be placed in the first accommodating groove 306, a size of the first accommodating groove 306 needs to be controlled to match a size of the stylus 400. Optionally, a length of the first accommodating groove 306 is greater than or equal to a width of the stylus 400, a width of the first accommodating groove 306 is greater than or equal to a maximum outer diameter of the stylus 400, and a depth of the first accommodating groove 306 is greater than or equal to the maximum outer diameter of the stylus 400.

It should be noted that, when the location of the first transmit coil 310 in the terminal device 300 and the location of the first receive coil 481 in the stylus 400 are designed, it needs to be considered that after the stylus 400 is placed in the first accommodating groove 360, the end face of the first transmit coil 310 and the end face of the first receive coil 481 need to be disposed directly opposite to each other. Designing is mainly performed based on aspects such as a distance between a plane formed at a center location of each cross section of the magnetic core in the first transmit coil 310 and a plane in which a lowest location of the first accommodating groove 306 is located, a distance between a plane formed at a center location of each cross section of the magnetic core in the first receive coil 481 and an outer surface of the stylus rod 420, a relative location that is of a center point of each end face of the magnetic core in the first transmit coil 310 and that is in the length direction of the first accommodating groove 306, and a relative location that is of a center point of each end face of the magnetic core in the first receive coil 481 and that is in the length direction of the stylus 400.

It is assumed that the length of the first accommodating groove 306 is equal to the length of the stylus 400, the width of the first accommodating groove 306 is equal to the maximum outer diameter of the stylus 400, and the depth of the first accommodating groove 306 is equal to the maximum outer diameter of the stylus 400. The surface that is in the second housing 303 and that is in buckle contact with the first housing 301 is referred to as a first surface. A surface that is in the second housing 303 and that is disposed opposite to the first surface is referred to as a second surface. The distance between the plane formed at the center location of each cross section of the magnetic core in the first transmit coil 310 and the plane in which the lowest location of the first accommodating groove 306 is located is equal to the distance between the plane formed at the center location of each cross section of the magnetic core in the first receive coil 481 and the outer surface of the stylus rod 420. Both the plane formed at the center location of the magnetic core in the first transmit coil 310 and the plane in which the lowest location of the first accommodating groove 306 is located are parallel to the first surface and the second surface. Each cross section of the magnetic core in the first transmit coil 310 is a cross section in an extension direction perpendicular to the magnetic core in the first transmit coil 310, and each cross section of the magnetic core in the first receive coil 481 is a cross section in an extension direction perpendicular to the magnetic core in the first receive coil 481.

When the first transmit coil 310 is a columnar transmit coil, the center point of each end face of the magnetic core in the first transmit coil 310 is located at a first location in the length direction of the first accommodating groove 306, and the center point of each end face of the magnetic core in the first receive coil 481 is also located at a first location in the length direction of the stylus 400. When the first transmit coil 310 is a U-shaped transmit coil, a center point of the end face of the first side part of the magnetic core in the U-shaped transmit coil is located at a second location in the length direction of the first accommodating groove 306, a center point of the end face of the second side part of the magnetic core in the U-shaped transmit coil is located at a third location in the length direction of the first accommodating groove 306, a center point of the end face of the magnetic core in the first receive coil 481 away from the stylus tip 410 is located at a second location in the length direction of the stylus 400, and a center point of the end face of the magnetic core in the first receive coil 481 facing the stylus tip 410 is located at a third location in the length direction of the stylus 400.

In addition, it is assumed that the length of the first accommodating groove 306 is greater than the length of the stylus 400, and the width of the first accommodating groove 306 is greater than the maximum outer diameter of the stylus 400. A location in which the stylus 400 is placed may alternatively be marked on the first accommodating groove 306. A user may place the stylus 400 at a proper location in the first accommodating groove 306 based on the marked location, so that the end face of the first transmit coil 310 and the end face of the first receive coil 481 are disposed directly opposite to each other.

For the U-shaped transmit coil and the first receive coil 481 shown in FIG. 7, to further increase the coupling coefficient between the first transmit coil 310 and the first receive coil 481, a central axis of the U-shaped transmit coil may be set to coincide with a central axis of the two series-connected first receive coils 481, and the central axis of the U-shaped transmit coil and the central axis of the two series-connected first receive coils 481 are shown as a direction A-A' in FIG. 7, and are parallel to the third direction. The central axis of the U-shaped transmit coil is a central axis between center points of the two end faces of the magnetic core in the U-shaped transmit coil, and the central axis of two series-connected first receive coils 481 is a central axis between center points of two end faces that are of the magnetic cores in the two series-connected first receive coils 481 and that face a same U-shaped transmit coil.

"Coinciding" described above refers to "coinciding" within an allowable error range. For example, when a deviation between the central axis of the U-shaped transmit coil and the central axes of the two series-connected first receive coils 481 is 2 mm, it may be considered by default that the central axis of the U-shaped transmit coil coincides with the central axis of the two series-connected first receive coils 481.

When the central axis of the U-shaped transmit coil coincides with the central axis of the two series-connected first receive coils, the two end faces of the magnetic core in the U-shaped transmit coil are not easily misaligned with ports of the magnetic cores in the two first receive coils 481. The magnetic field emitted from and entering the two end faces of the magnetic core in the U-shaped transmit coil separately may be coupled by the two series-connected first receive coils 481, thereby further increasing the coupling coefficient between the first transmit coil 310 and the first receive coil 481.

In addition, to further increase the coupling coefficient between the first transmit coil 310 and the first receive coil 481, a distance between the end face that is of the magnetic core in the first transmit coil 310 and that faces the first accommodating groove 306 and the end face that is of the magnetic core in the first receive coil 481 and that faces the first transmit coil 310 coupled to the first receive coil 481 needs to be shortened. Optionally, the distance between the end face that is of the magnetic core in the first transmit coil 310 and that faces the first accommodating groove 306 and the end face that is of the magnetic core in the first receive coil 481 and that faces the first transmit coil 310 coupled to the first receive coil 481 is 3 mm to 5 mm. A smaller distance between the end face that is of the magnetic core in the first transmit coil 310 and that faces the first accommodating groove 306 and the end face that is of the magnetic core in the first receive coil 481 and that faces the first transmit coil 310 coupled to the first receive coil 481 indicates a higher coupling coefficient.

In an actual product, the stylus rod 420 of the stylus 400 has a specific thickness, a specific gap exists between the end face of the magnetic core in the first receive coil 481 and an inner sidewall of the stylus rod 420, and a specific gap also exists between the first accommodating groove 306 and the end face that is of the first transmit coil 310 and that faces the first accommodating groove 306. A minimum distance between the end face that is of the magnetic core in the first transmit coil 310 and that faces the first accommodating groove 306 and the end face that is of the magnetic core in the first receive coil 481 and that faces the first transmit coil 310 coupled to the first receive coil 481 is basically about 3 mm due to these factors. Therefore, the distance between the end face that is of the magnetic core in the first transmit coil 310 and that faces the first accommodating groove 306 and the end face that is of the magnetic core in the first receive coil 481 and that faces the first transmit coil 310 coupled to the first receive coil 481 is 3 mm to 5 mm in consideration of a manufacturing factor.

It should be noted that, with process improvement, for example, when a thickness of the stylus rod 420 of the stylus 400 is reduced, the distance between the end face that is of the magnetic core in the first transmit coil 310 and that faces the first accommodating groove 306 and the end face that is of the magnetic core in the first receive coil 481 and that faces the first transmit coil 310 coupled to the first receive coil 481 may be further shortened to be less than 3 mm.

In this embodiment of this application, in the extension direction perpendicular to the magnetic core in the first transmit coil 310, a shape of the cross section of the magnetic core in the first transmit coil 310 may be rectangular, circular, oval, or the like. In the extension direction perpendicular to the magnetic core in the first receive coil 481, a shape of the cross section of the magnetic core in the first receive coil 481 may also be rectangular, circular, oval, or the like.

A material of the magnetic core in the first transmit coil 310 and a material of the magnetic core in the first receive coil 481 each may be a material with high magnetic conductivity, for example, ferrite or silicon steel.

In addition, a quantity of turns of the coil wound on the magnetic core in the first transmit coil 310 and a quantity of turns of the coil wound on the magnetic core in the first receive coil 481 may be set based on an actual requirement, for example, may be set based on a wireless charging power. When the wireless charging power is larger, the quantity of turns of the coil wound on the magnetic core in the first transmit coil 310 and the quantity of turns of the coil wound on the magnetic core in the first receive coil 481 are larger. However, to ensure that electromagnetic coupling can be implemented between the first transmit coil 310 and the first receive coil 481, the quantity of turns of the coil wound on the magnetic core in the first transmit coil 310 and the quantity of turns of the coil wound on the magnetic core in the first receive coil 481 each are at least one turn.

In addition, wire diameters of the coils wound in the first transmit coil 310 and the first receive coil 481, layer quantities of the coils wound in the first transmit coil 310 and the first receive coil 481, and whether the coils wound in the first transmit coil 310 and the first receive coil 481 are single-stranded or multi-stranded in parallel are not limited in this embodiment of this application.

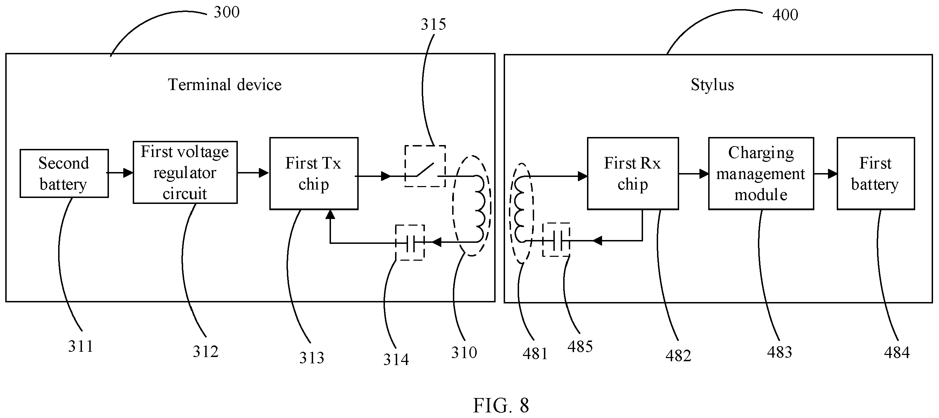

FIG. 8 is a diagram of a system architecture of a wireless charging system according to an embodiment of this application. Refer to FIG. 8. The stylus 400 includes a first receive coil 481, a first Rx chip 482, a charging management chip 483, and a first battery 484. The first Rx chip 482 is an Rx chip disposed in the stylus 400, the first battery 484 is a battery disposed in the stylus 400, the first receive coil 481 in the stylus 400 is connected to the first Rx chip 482, the first Rx chip 482 is connected to the charging management chip 483, and the charging management chip 483 is connected to the first battery 484.

The terminal device 300 includes a second battery 311, a first voltage regulator circuit 312, a first Tx chip 313, and a first transmit coil 310. The second battery 311 is a battery of the terminal device, the first Tx chip 313 is a Tx chip disposed in the terminal device, the second battery 311 is connected to the first voltage regulator circuit 312, the first voltage regulator circuit 312 is connected to the first Tx chip 313, and the first Tx chip 313 is connected to the first transmit coil 310.

When the stylus 400 is charged by using the terminal device 300, the second battery 311 is configured to provide a first direct current electrical signal to the first voltage regulator circuit 312; the first voltage regulator circuit 312 is configured to perform voltage regulation on the first direct current electrical signal provided by the second battery 311, and provide the first direct current electrical signal obtained after voltage regulation to the first Tx chip 313; the first Tx chip 313 converts the first direct current electrical signal obtained after voltage regulation processing into a second alternating current electrical signal, and provides the second alternating current electrical signal to the first transmit coil 310; and the first transmit coil 310 generates a first alternating electromagnetic field in response to the second alternating current electrical signal.

After the stylus 400 is placed in the first accommodating groove 306 of the terminal device 300, the first receive coil 481 in the stylus 400 is configured to generate a first alternating current electrical signal by inducing the first alternating electromagnetic field provided by the first transmit coil 310, and transmit the first alternating current electrical signal to the first Rx chip 482; the first Rx chip 482 is configured to convert the first alternating current electrical signal generated by the first receive coil 481 into a second direct current electrical signal, and transmit the second direct current electrical signal to the charging management chip 483; and the charging management chip 483 is configured to charge the first battery 484 by using the second direct current electrical signal.

In addition, a first capacitor 485 is further connected in series between the first receive coil 481 and the first Rx chip 482, and the first capacitor 485 performs filtering processing on an alternating current electrical signal generated by the first receive coil 481 through coupling. A second capacitor 314 and a first switching device 315 are further separately connected in series between the first Tx chip 313 and the first transmit coil 310. The second capacitor 314 is configured to perform filtering processing on an alternating current electrical signal provided by the first Tx chip 313 to the first transmit coil 310. The first switching device 315 is configured to: when it is detected that the stylus 400 is placed in the first accommodating groove 306 of the terminal device 300, turn on the first switching device 315, so that the first Tx chip 313 can provide the second alternating current electrical signal to the first transmit coil 310; and when it is detected that the stylus 400 is not placed in the first accommodating groove 306 of the terminal device 300, turn off the first switching device 315, so that the first Tx chip 313 does not provide the second alternating current electrical signal to the first transmit coil 310.

It can be seen from FIG. 8 that both of the two ends of the first transmit coil 310 are connected to the first Tx chip 313. When the terminal device 300 includes two series-connected first transmit coils 310, two ends that are in the first transmit coils 310 and that are connected to the first Tx chip 313 are respectively one end that is of the coil of the first transmit coil 310 disposed on the first side of the first accommodating groove 306 and that is not connected to the first transmit coil 310 disposed on the second side of the first accommodating groove 306, and one end that is of the coil of the first transmit coil 310 disposed on the second side of the first accommodating groove 306 and that is not connected to the first transmit coil 310 disposed on the first side of the first accommodating groove 306.

Correspondingly, both of the two ends of the first receive coil 481 are connected to the first Rx chip 482. When the stylus 400 includes two series-connected first receive coils 481, two ends that are in the first receive coils 481 and that are connected to the first Rx chip 482 are respectively one end that is of the coil of the first columnar receive coil 481a and that is not connected to the second columnar receive coil 481b, and one end that is of the coil of the second columnar receive coil 481b and that is not connected to the first columnar receive coil 481a.

It should be noted that the first voltage regulator circuit 312 may be a boost circuit (boost circuit), a low drop-out regulator (low drop-out regulator, LDO) circuit, a buck circuit (buck circuit), or the like. A specific circuit of the first voltage regulator circuit 312 may be determined based on a voltage provided by the second battery 311 and a voltage that needs to be provided to the first transmit coil 310.

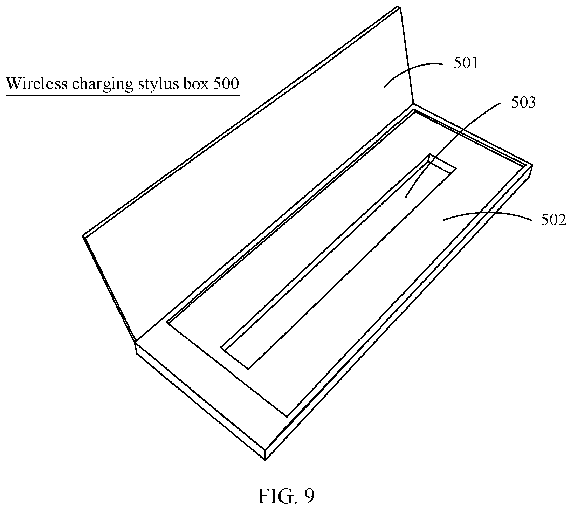

In some embodiments, the wireless charging device may be a wireless charging stylus box 500 shown in FIG. 9. The wireless charging stylus box 500 includes a box cover 501, a box body 502, and a second accommodating groove 503. The box cover 501 is movably connected to the box body 502. A second transmit coil 510 is disposed in the box body 502, the box body 502 has the second accommodating groove 503, and the second transmit coil 510 is located outside the second accommodating groove 503.

The second accommodating groove 503 of the wireless charging stylus box 500 is configured to accommodate the stylus 400, so that when an input operation is performed on the touch control screen 301 without using the stylus 400, the stylus 400 is placed in the second accommodating groove 503 of the wireless charging stylus box 500, to accommodate the stylus 400. In addition, the second transmit coil 510 may be disposed in the box body 502, and the first receive coil 481 may be disposed in the stylus 400. After the stylus 400 is placed in the second accommodating groove 503 of the wireless charging stylus box 500, the wireless charging stylus box 500 can charge the stylus 400 based on the second transmit coil 510 in the box body 502 and the first receive coil 481 in the stylus 400.

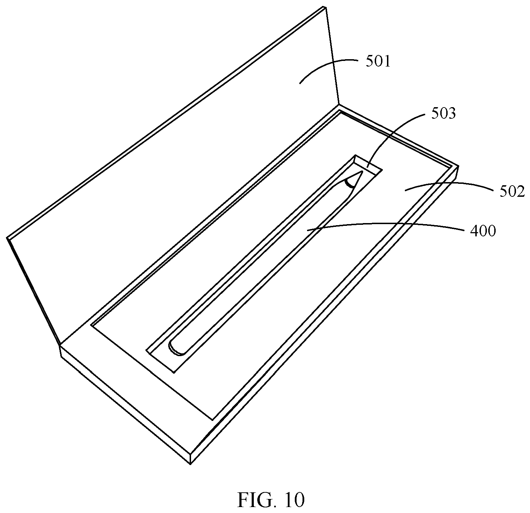

FIG. 10 is a schematic diagram of accommodating a stylus in an accommodating groove of a wireless charging stylus box according to an embodiment of this application. Refer to FIG. 10. In some embodiments, the stylus 400 may be placed in the second accommodating groove 503 of the wireless charging stylus box 500 to charge the first battery 484 in the stylus 400. After the stylus 400 is placed in the second accommodating groove 503 of the wireless charging stylus box 500, a location relationship between the second transmit coil 510 disposed in the wireless charging stylus box 500 and the stylus 400 is similar to a location relationship between the first transmit coil 310 disposed in the terminal device 300 and the stylus 400. To be specific, after the stylus 400 is placed in the second accommodating groove 503, an end face that is of a magnetic core in the second transmit coil 510 and that faces the second accommodating groove 503 and an end face that is of a magnetic core in the first receive coil 481 and that faces the second transmit coil 510 coupled to the first receive coil 481 have at least regions partially disposed directly opposite to each other. Optionally, after the stylus 400 is placed in the second accommodating groove 503, the end face that is of the magnetic core in the second transmit coil 510 and that faces the second accommodating groove 503 is completely disposed directly opposite to the end face that is of the magnetic core in the first receive coil 481 and that faces the second transmit coil 510 coupled to the first receive coil 481.

In addition, a structure of the second transmit coil 510 disposed in the wireless charging stylus box 500 is similar to that of the first transmit coil 310 shown in FIG. 6 or FIG. 7. Similar to the first transmit coil 310 shown in FIG. 6, shapes of magnetic cores in the second transmit coils 510 are all columnar, one end face of the magnetic core in each second transmit coil 510 faces the second accommodating groove 503, and the other end face of the magnetic core in each second transmit coil 510 is away from the second accommodating groove 503. Alternatively, similar to the first transmit coil 310 shown in FIG. 7, a shape of the magnetic core in the second transmit coil 510 is a U shape, and both of the two end faces of the magnetic core in each second transmit coil 510 face the second accommodating groove 503. Optionally, the shape of the magnetic core in the second transmit coil 510 may alternatively be a V shape, a C shape, or the like.

In addition, there may be one or two second transmit coils 510 in the box body 502. When only one second transmit coil 510 is disposed in the box body 502, the second transmit coil 510 is located on one side outside the second accommodating groove 503. For example, the second transmit coil 510 is located on one side that is of the second accommodating groove 503 and that is away from a connection part between the box cover 501 and the box body 502, or the second transmit coil 510 is located on one side that is of the second accommodating groove 503 and that faces a connection part between the box cover 501 and the box body 502. When two second transmit coils 510 are disposed in the box body 502, the two second transmit coils 510 are connected in series, and are respectively located on the side that is of the second accommodating groove 503 and that is away from the connection part between the box cover 501 and the box body 502 and the side that is of the second accommodating groove 503 and that faces the connection part between the box cover 501 and the box body 502, and winding directions of the two series-connected second transmit coils 510 are the same.

It should be noted that for a specific structure of the second transmit coil 510 disposed in the wireless charging stylus box 500, a location relationship and a distance relationship between the second transmit coil 510 disposed in the wireless charging stylus box 500 and the first receive coil 481, and the like, refer to related descriptions of the first transmit coil 310 disposed in the terminal device 300. Details are not described herein again to avoid repetition.

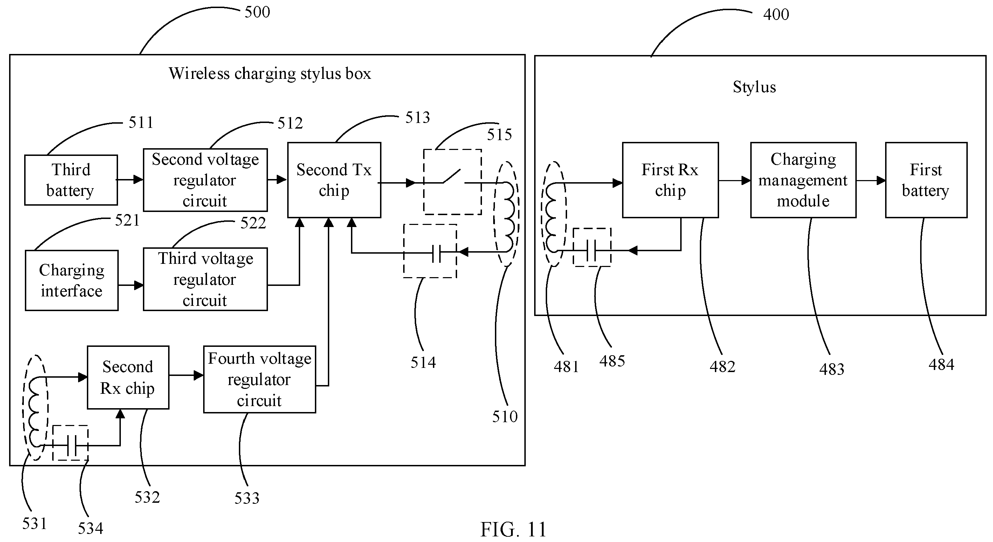

FIG. 11 is a diagram of a system architecture of another wireless charging system according to an embodiment of this application. Refer to FIG. 11. The stylus 400 includes a first receive coil 481, a first Rx chip 482, a charging management chip 483, a first battery 484, and a first capacitor 485.

The wireless charging stylus box 500 includes a third battery 511, a second voltage regulator circuit 512, a second Tx chip 513, and a second transmit coil 510. The third battery 511 is a battery of the wireless charging stylus box 500, the second Tx chip 513 is a Tx chip disposed in the wireless charging stylus box 500, the third battery 511 is connected to the second voltage regulator circuit 512, the second voltage regulator circuit 512 is connected to the second Tx chip 513, and the second Tx chip 513 is connected to the second transmit coil 510.

When the stylus 400 is charged by using the wireless charging stylus box 500, the third battery 511 is configured to provide a third direct current electrical signal to the second voltage regulator circuit 512; the second voltage regulator circuit 512 is configured to perform voltage regulation on the third direct current electrical signal provided by the third battery 511, and provide the third direct current electrical signal obtained after voltage regulation to the second Tx chip 513; the second Tx chip 513 converts the third direct current electrical signal obtained after voltage regulation into a fourth alternating current electrical signal, and provides the fourth alternating current electrical signal to the second transmit coil 510; and the second transmit coil 510 generates a second alternating electromagnetic field in response to the fourth alternating current electrical signal.

Alternatively, the wireless charging stylus box 500 includes a charging interface 521, a third voltage regulator circuit 522, a second Tx chip 513, and a second transmit coil 510. The charging interface 521 is connected to the third voltage regulator circuit 522, and the third voltage regulator circuit 522 is connected to the second Tx chip 513.

When the stylus 400 is charged by using the wireless charging stylus box 500, the charging interface 521 of the wireless charging stylus box 500 is first connected to an external power supply by using a wired power adapter; the external power supply provides the third direct current electrical signal to the third voltage regulator circuit 522 through the charging interface 521; the third voltage regulator circuit 522 is configured to perform voltage regulation on the third direct current electrical signal input by the charging interface 521, and provide the third direct current electrical signal obtained after voltage regulation to the second Tx chip 513; the second Tx chip 513 converts the third direct current electrical signal obtained after voltage regulation into the fourth alternating current electrical signal, and provides the fourth alternating current electrical signal to the second transmit coil 510; and the second transmit coil 510 generates the second alternating electromagnetic field in response to the fourth alternating current electrical signal.

Alternatively, the wireless charging stylus box 500 includes a second receive coil 531, a second Rx chip 532, a fourth voltage regulator circuit 533, a second Tx chip 513, and a second transmit coil 510. The second receive coil 531 is connected to the second Rx chip 532, the second Rx chip 532 is connected to the fourth voltage regulator circuit 533, and the fourth voltage regulator circuit 533 is connected to the second Tx chip 513. In addition, a fourth capacitor 534 is further connected in series between the second receive coil 531 and the second Rx chip 532, and the fourth capacitor 534 is configured to filter a fifth alternating current electrical signal generated by the second receive coil 531.

When the stylus 400 is charged by using the wireless charging stylus box 500, the second receive coil 531 may receive a third alternating electromagnetic field provided by a transmit coil in another external device to generate the fifth alternating current electrical signal; the second Rx chip 532 converts the fifth alternating current electrical signal generated by the second receive coil 531 into the third direct current electrical signal, and provides the third direct current electrical signal to the fourth voltage regulator circuit 533; the fourth voltage regulator circuit 533 is configured to perform voltage regulation on the third direct current electrical signal provided by the second Rx chip 532, and provide the third direct current electrical signal obtained after voltage regulation to the second Tx chip 513; the second Tx chip 513 converts the third direct current electrical signal obtained after voltage regulation into the fourth alternating current electrical signal, and provides the fourth alternating current electrical signal to the second transmit coil 510; and the second transmit coil 510 generates the second alternating electromagnetic field in response to the fourth alternating current electrical signal.

It may be understood that the third battery 511 may be disposed in the wireless charging stylus box 500, and power may be supplied to the second Tx chip 513 in the wireless charging stylus box 500 by using the third battery 511. Alternatively, the charging interface 521 may be disposed in the wireless charging stylus box 500, and the external power supply is connected to the charging interface 521 to supply power to the second Tx chip 513. Alternatively, the second receive coil 531 may be disposed in the wireless charging stylus box 500, and power is supplied to the second Tx chip 513 by receiving an alternating electromagnetic field provided by another device.

After the stylus 400 is placed in the second accommodating groove 503 in the wireless charging stylus box 500, the first receive coil 481 in the stylus 400 is configured to generate a third alternating current electrical signal by inducing the second alternating electromagnetic field provided by the second transmit coil 510; the first Rx chip 482 is configured to convert the third alternating current electrical signal generated by the first receive coil 481 into a fourth direct current electrical signal, and transmit the fourth direct current electrical signal to the charging management chip 483; and the charging management chip 483 is configured to charge the first battery 484 by using the fourth direct current electrical signal.

In addition, a third capacitor 514 and a second switching device 515 are further separately connected in series between the second Tx chip 513 and the second transmit coil 510. The third capacitor 514 is configured to perform filtering processing on the fourth alternating current electrical signal provided by the second Tx chip 513 to the second transmit coil 510. The second switching device 515 is configured to be turned on when it is detected that the stylus 400 is placed in the second accommodating groove 503 in the wireless charging stylus box 500, so that the second Tx chip 513 can provide the fourth alternating current electrical signal to the second transmit coil 510.

It should be noted that the second voltage regulator circuit 512, the third voltage regulator circuit 522, and the fourth voltage regulator circuit 533 may be three independent circuits, or may be one circuit. The second voltage regulator circuit 512, the third voltage regulator circuit 522, and the fourth voltage regulator circuit 533 each may be a boost circuit, an LDO circuit, a buck circuit, or the like. A specific circuit of each of the second voltage regulator circuit 512, the third voltage regulator circuit 522, and the fourth voltage regulator circuit 533 may be determined based on an input voltage and a voltage that needs to be provided to the second transmit coil 510.

## Claims

1. A wireless charging system, comprising a terminal device (300) and a stylus (400), wherein
the terminal device (300) comprises a housing and two series-connected first transmit coils (310c, 310d) disposed in the housing, the housing has a first accommodating groove (306), the two series-connected first transmit coils (310c, 310d) are respectively located on two opposite sides outside the first accommodating groove (306), winding directions of the two series-connected first transmit coils (310c, 310d) are the same, a shape of a magnetic core in each first transmit coil is any one of a U shape, a V shape, or a C shape; and both of the two end faces of the magnetic core in each first transmit coil face the first accommodating groove (306);
the stylus (400) comprises a stylus body and two series-connected first receive coils (481a, 481b) disposed in the stylus body, the two series-connected first receive coils (481a, 481b) are distributed in a length direction of the stylus (400), winding directions of the two series-connected first receive coils (481a, 481b) are the same, a shape of a magnetic core in each first receive coil is columnar, two end faces of the magnetic core in each first receive coil are disposed opposite to each other, and both end faces of the magnetic core in each first receive coil face a sidewall of the stylus body;
after the stylus (400) is placed in the first accommodating groove (306), both of the two end faces of the magnetic core in one of the two first transmit coils and an end face of the magnetic core in each first receive coil that faces the one of the two first transmit coils coupled to each first receive coil have at least regions partially disposed directly opposite to each other, and both of the two end faces of the magnetic core in the other of the two first transmit coils and an end face of the magnetic core in each first receive coil that faces the other of the two first transmit coils coupled to each first receive coil have at least regions partially disposed directly opposite to each other; and
the two first transmit coils are configured to provide a first alternating electromagnetic field to the two first receive coils after the stylus (400) is placed in the first accommodating groove (306), and the two first receive coils are configured to generate a first alternating current electrical signal by inducing the first alternating electromagnetic field provided by the two first transmit coils, to charge the stylus (400).

2. The wireless charging system according to claim 1, wherein after the stylus (400) is placed in the first accommodating groove (306), orthographic projections, in a first target direction, of both of the end faces of the magnetic core in one of the two first transmit coils cover at least orthographic projections, in the first target direction, of the end face of the magnetic core in each first receive coil that faces the one of the two first transmit coils coupled to each first receive coil; orthographic projections, in the first target direction, of both of the end faces of the magnetic core in the other of the two first transmit coils cover at least orthographic projections, in the first target direction, of the end face of the magnetic core in each first receive coil that faces the other of the two first transmit coils coupled to each first receive coil; and the first target direction is a direction in which the one of the two first transmit coils points to the first accommodating groove (306).

3. The wireless charging system according to claim 1, wherein after the stylus (400) is placed in the first accommodating groove (306), a central axis of each first transmit coil coincides with a central axis of the two series-connected first receive coils (481a, 481b); and the central axis of each first transmit coil is a central axis between center points of the two end faces of the magnetic core in the respective first transmit coil, and the central axis of the two series-connected first receive coils (481a, 481b) is a central axis between center points of two end faces that are of the magnetic cores in the two series-connected first receive coils (481a, 481b) and that are disposed on a same side.

4. The wireless charging system according to claim 1, wherein for each of the two end faces of the magnetic core in one of the two first transmit coils, a distance between the end face and the end face of the magnetic core in each first receive coil that faces the one of the two first transmit coils coupled to each first receive coil is 3 mm to 5 mm; and
for each of the two end faces of the magnetic core in the other of the two first transmit coils, a distance between the end face and the end face of the magnetic core in each first receive coil that faces the other of the two first transmit coils coupled to each first receive coil is 3 mm to 5 mm.

5. The wireless charging system according to claim 1, wherein the stylus (400) further comprises a first Rx chip (482), a charging management chip, and a first battery (484) that are disposed in the stylus body, the two first receive coils, the first Rx chip (482), the charging management chip, and the first battery (484) are sequentially connected, the terminal device (300) further comprises a second battery (311), a first voltage regulator circuit (312), and a first Tx chip (313) that are disposed in the housing, and the second battery (311), the first voltage regulator circuit (312), the first Tx chip (313), and the two first transmit coils are sequentially connected;
the second battery (311) is configured to provide a first direct current electrical signal to the first voltage regulator circuit (312);
the first voltage regulator circuit (312) is configured to perform voltage regulation processing on the first direct current electrical signal, and provide the first direct current electrical signal obtained after the voltage regulation processing to the first Tx chip (313);
the first Tx chip (313) is configured to convert the first direct current electrical signal obtained after the voltage regulation processing into a second alternating current electrical signal, and transmit the second alternating current electrical signal to the two first transmit coils;
the two first transmit coils are configured to generate the first alternating electromagnetic field in response to the second alternating current electrical signal;
the two first receive coils are configured to generate the first alternating current electrical signal by inducing the first alternating electromagnetic field, and transmit the first alternating current electrical signal to the first Rx chip (482);
the first Rx chip (482) is configured to convert the first alternating current electrical signal into a second direct current electrical signal, and transmit the second direct current electrical signal to the charging management chip; and
the charging management chip is configured to charge the first battery (484) by using the second direct current electrical signal.

6. A wireless charging stylus box (500), comprising a box body (502) and two series-connected second transmit coils (510) disposed in the box body (502), the box body (502) has a second accommodating groove (503), the two series-connected second transmit coils (510) are respectively located on two opposite sides outside the second accommodating groove (503), winding directions of the two series-connected second transmit coils (510) are the same, a shape of the magnetic core in each first transmit coil is any one of a U shape, a V shape, or a C shape and both of the two end faces of the magnetic core in each second transmit coil face the second accommodating groove (503);
after a stylus (400) is placed in the second accommodating groove (503), both of the two end faces of the magnetic core in one of the two second transmit coils (510) and an end face of a magnetic core in each of two series-connected first receive coils (481a, 481b) disposed in the stylus (400) that face the one of the two second transmit coils (510) coupled to each first receive coil have at least regions partially disposed directly opposite to each other, and both of the two end faces of the magnetic core in the other of the two second transmit coils (510) and an end face of the magnetic core in each first receive coil that faces the other of the two second transmit coils (510) coupled to each first receive coil have at least regions partially disposed directly opposite to each other; and
the two second transmit coils (510) are configured to provide a second alternating electromagnetic field to the two first receive coils after the stylus (400) is placed in the second accommodating groove (503), to charge the stylus (400);

7. The wireless charging stylus box (500) according to claim 6, wherein after the stylus (400) is placed in the second accommodating groove (503), orthographic projections, in a second target direction, of both of the end faces of the magnetic core in one of the two second transmit coils (510) cover at least orthographic projections, in the second target direction, of the end face of the magnetic core in each first receive coil that faces the one of the two second transmit coils (510) coupled to each first receive coil; orthographic projections, in the second target direction, of both of the end faces of the magnetic core in the other of the two second transmit coils (510) cover at least orthographic projections, in the second target direction, of the end face of the magnetic core in each first receive coil that faces the other of the two second transmit coils (510) coupled to each first receive coil; and the second target direction is a direction in which one of the two second transmit coils (510) points to the second accommodating groove (503).

8. The wireless charging stylus box (500) according to claim 7, wherein after the stylus (400) is placed in the second accommodating groove (503), a central axis of each second transmit coil coincides with a central axis of the two series-connected first receive coils (481a, 481b); and the central axis of each second transmit coil is a central axis between center points of the two end faces of the magnetic core in the respective second transmit coil, and the central axis of the two series-connected first receive coils (481a, 481b) is a central axis between center points of two end faces that are of magnetic cores in two series-connected first receive coils (481a, 481b) and that are disposed on a same side.

9. The wireless charging stylus box (500) according to claim 6, wherein for each of the two end faces of the magnetic core in one of the two second transmit coils (510), a distance between the end face and the end face of the magnetic core in each first receive coil that faces the one of the two second transmit coils (510) coupled to each first receive coil is 3 mm to 5 mm; and
for each of the two end faces of the magnetic core in the other of the two second transmit coils (510), a distance between the end face and the end face of the magnetic core in each first receive coil that faces the other of the two second transmit coils (510) coupled to each first receive coil is 3 mm to 5 mm.

10. The wireless charging stylus box (500) according to claim 6, wherein the wireless charging stylus box (500) further comprises a power supply module and a second Tx chip (513) that are disposed in the box body (502), and the power supply module, the second Tx chip (513), and the two second transmit coils (510) are sequentially connected;
the power supply module is configured to provide a third direct current electrical signal to the second Tx chip (513);
the second Tx chip (513) is configured to convert the third direct current electrical signal provided by the power supply module into a fourth alternating current electrical signal, and transmit the fourth alternating current electrical signal to the two second transmit coils (510); and
the two second transmit coils (510) are configured to generate the second alternating electromagnetic field in response to the fourth alternating current electrical signal, and transmit the second alternating electromagnetic field to the two first receive coils.

11. A wireless charging system comprising a wireless charging stylus box (500) according to claim 6, and a stylus (400), wherein:
the stylus (400) comprises two series-connected first receive coils (481a, 481b) disposed in the stylus (400) body, the two series-connected first receive coils (481a, 481b) are distributed in a length direction of the stylus (400), winding directions of the two series-connected first receive coils (481a, 481b) are the same, a shape of a magnetic core in each first receive coil is columnar, two end faces of the magnetic core in each first receive coil are disposed opposite to each other, and both end faces of the magnetic core in each first receive coil face a sidewall of the stylus (400) body; and
the two first receive coils are configured to generate a third alternating current electrical signal by inducing the second alternating electromagnetic field provided by the two second transmit coils (510), to charge the stylus (400).

## Patentansprüche

1. Ein drahtloses Ladesystem, umfassend ein Endgerät (300) und einen Eingabestift (400), wobei
das Endgerät (300) ein Gehäuse und zwei in Reihe geschaltete erste Sende-Spulen (310c, 310d) umfasst, die im Gehäuse angeordnet sind, wobei das Gehäuse eine erste Aufnahmerille (306) aufweist, die beiden in Reihe geschalteten ersten Sende-Spulen (310c, 310d) sich jeweils auf zwei gegenüberliegenden Außenseiten der ersten Aufnahmerille (306) befinden, die Wickelrichtungen der beiden in Reihe geschalteten ersten Sende-Spulen (310c, 310d) gleich sind, die Form eines Magnetkerns in jeder ersten Sende-Spule eine beliebige aus U-Form, V-Form oder C-Form ist; und beide Stirnseiten des Magnetkerns in jeder ersten Sende-Spule auf die erste Aufnahmerille (306) gerichtet sind;
der Eingabestift (400) einen Stiftkörper sowie zwei in Reihe geschaltete erste Empfangsspulen (481a, 481b) umfasst, die im Stiftkörper angeordnet sind, wobei die beiden in Reihe geschalteten ersten Empfangsspulen (481a, 481b) in Längsrichtung des Eingabestifts (400) verteilt sind, die Wickelrichtungen der beiden in Reihe geschalteten ersten Empfangsspulen (481a, 481b) gleich sind, die Form eines Magnetkerns in jeder ersten Empfangsspule säulenförmig ist, die beiden Stirnseiten des Magnetkerns in jeder ersten Empfangsspule einander gegenüberliegen und beide Stirnseiten des Magnetkerns in jeder ersten Empfangsspule auf eine Seitenwand des Stiftkörpers gerichtet sind;
nachdem der Eingabestift (400) in die erste Aufnahmerille (306) eingelegt ist, sowohl die beiden Stirnseiten des Magnetkerns in einer der beiden ersten Sende-Spulen als auch eine Stirnseite des Magnetkerns in jeder ersten Empfangsspule, die auf die eine der beiden ersten Sende-Spulen gerichtet ist, mit jeder Empfangsspule mindestens teilweise unmittelbar einander gegenüberliegen, und sowohl die beiden Stirnseiten des Magnetkerns in der anderen der beiden ersten Sende-Spulen als auch eine Stirnseite des Magnetkerns in jeder ersten Empfangsspule, die auf die andere der beiden ersten Sende-Spulen gerichtet ist, mit jeder Empfangsspule mindestens teilweise unmittelbar einander gegenüberliegen; und
die beiden ersten Sende-Spulen so konfiguriert sind, dass sie ein erstes Wechselmagnetfeld an die beiden ersten Empfangsspulen abgeben, nachdem der Eingabestift (400) in die erste Aufnahmerille (306) gelegt wurde, und die beiden ersten Empfangsspulen so konfiguriert sind, dass sie durch Induktion des von den beiden ersten Sende-Spulen bereitgestellten ersten Wechselmagnetfelds ein erstes Wechselstrom-Elektrosignal erzeugen, um den Eingabestift (400) aufzuladen.

2. Das drahtlose Ladesystem nach Anspruch 1, wobei nach dem Einlegen des Stifts (400) in die erste Aufnahmerille (306) die rechtwinkligen Projektionen der beiden Stirnflächen des Magnetkerns in einer der beiden ersten Übertragungs-Spulen in einer ersten Zielrichtung mindestens die rechtwinkligen Projektionen in der ersten Zielrichtung der Stirnfläche des Magnetkerns in jeder ersten Empfangsspule abdecken, die der einen der beiden ersten Übertragungsspulen zugewandt ist, die an jede erste Empfangsspule gekoppelt ist; die rechtwinkligen Projektionen in der ersten Zielrichtung der beiden Stirnflächen des Magnetkerns in der anderen der beiden ersten Übertragungsspulen mindestens die rechtwinkligen Projektionen in der ersten Zielrichtung der Stirnfläche des Magnetkerns in jeder ersten Empfangsspule abdecken, die der anderen der beiden ersten Übertragungsspulen zugewandt ist, die an jede erste Empfangsspule gekoppelt ist; und die erste Zielrichtung ist die Richtung, in die eine der beiden ersten Übertragungsspulen auf die erste Aufnahmerille (306) zeigt.

3. Das drahtlose Ladesystem nach Anspruch 1, wobei nach dem Einlegen des Stifts (400) in die erste Aufnahmerille (306) eine Mittelachse jeder ersten Übertragungsspule mit einer Mittelachse der zwei in Serie geschalteten ersten Empfangsspulen (481a, 481b) zusammenfällt; und die Mittelachse jeder ersten Übertragungsspule eine Mittelachse zwischen den Mittelpunkten der beiden Stirnflächen des Magnetkerns in der jeweiligen ersten Übertragungsspule ist, und die Mittelachse der zwei in Serie geschalteten ersten Empfangsspulen (481a, 481b) eine Mittelachse zwischen den Mittelpunkten der zwei Stirnflächen ist, die zu den Magnetkernen in den zwei in Serie geschalteten ersten Empfangsspulen (481a, 481b) gehören und auf derselben Seite angeordnet sind.

4. Das drahtlose Ladesystem nach Anspruch 1, wobei für jede der beiden Stirnflächen des Magnetkerns in einer der beiden ersten Übertragungsspulen der Abstand zwischen der Stirnfläche und der Stirnfläche des Magnetkerns in jeder ersten Empfangsspule, die zu der einen der beiden ersten Übertragungsspulen zeigt und an jede erste Empfangsspule gekoppelt ist, 3 mm bis 5 mm beträgt; und
für jede der beiden Stirnflächen des Magnetkerns in der anderen der beiden ersten Übertragungsspulen der Abstand zwischen der Stirnfläche und der Stirnfläche des Magnetkerns in jeder ersten Empfangsspule, die zu der anderen der beiden ersten Übertragungsspulen zeigt und an jede erste Empfangsspule gekoppelt ist, 3 mm bis 5 mm beträgt.

5. Das drahtlose Ladesystem nach Anspruch 1, wobei der Stift (400) weiterhin einen ersten Rx-Chip (482), einen Lademanagementchip und eine erste Batterie (484) umfasst, die im Stiftgehäuse angeordnet sind, wobei die beiden ersten Empfangsspulen, der erste Rx-Chip (482), der Lademanagementchip und die erste Batterie (484) nacheinander verbunden sind, das Endgerät (300) ferner eine zweite Batterie (311), eine erste Spannungsregelschaltung (312) und einen ersten Tx-Chip (313) umfasst, die im Gehäuse angeordnet sind, und die zweite Batterie (311), die erste Spannungsregelschaltung (312), der erste Tx-Chip (313) und die beiden ersten Übertragungsspulen nacheinander verbunden sind;
die zweite Batterie (311) ist dazu eingerichtet, der ersten Spannungsregelschaltung (312) ein erstes Gleichstrom-Elektrizitätssignal bereitzustellen;
die erste Spannungsregelschaltung (312) ist dazu eingerichtet, das erste Gleichstrom-Elektrizitätssignal einer Spannungsregelungsverarbeitung zu unterziehen und das nach der Spannungsregelung erhaltene erste Gleichstrom-Elektrizitätssignal dem ersten Tx-Chip (313) bereitzustellen;
der erste Tx-Chip (313) ist dazu eingerichtet, das nach der Spannungsregelung erhaltene erste Gleichstrom-Elektrizitätssignal in ein zweites Wechselstrom-Elektrizitätssignal umzuwandeln und das zweite Wechselstrom-Elektrizitätssignal an die beiden ersten Übertragungsspulen zu übertragen;
die beiden ersten Übertragungsspulen sind dazu eingerichtet, als Reaktion auf das zweite Wechselstrom-Elektrizitätssignal das erste wechselnde elektromagnetische Feld zu erzeugen;
die beiden ersten Empfangsspulen sind dazu eingerichtet, durch Induktion des ersten wechselnden elektromagnetischen Feldes das erste Wechselstrom-Elektrizitätssignal zu erzeugen und das erste Wechselstrom-Elektrizitätssignal an den ersten Rx-Chip (482) zu übertragen;
der erste Rx-Chip (482) ist dazu eingerichtet, das erste Wechselstrom-Elektrizitätssignal in ein zweites Gleichstrom-Elektrizitätssignal umzuwandeln und das zweite Gleichstrom-Elektrizitätssignal an den Lademanagementchip zu übertragen; und
der Lademanagementchip ist dazu eingerichtet, die erste Batterie (484) mittels des zweiten Gleichstrom-Elektrizitätssignals aufzuladen.

6. Eine drahtlose Ladestifthülle (500), die ein Gehäuse (502) und zwei in Serie geschaltete zweite Sendespulen (510) umfasst, die im Gehäuse (502) angeordnet sind. Das Gehäuse (502) weist eine zweite Aufnahmerille (503) auf. Die beiden in Serie geschalteten zweiten Sendespulen (510) befinden sich jeweils an gegenüberliegenden Seiten außerhalb der zweiten Aufnahmerille (503). Die Wickelrichtungen der beiden in Serie geschalteten zweiten Sendespulen (510) sind gleich. Die Form des Magnetkerns in jeder ersten Sendespule ist beliebig eine U-Form, eine V-Form oder eine C-Form, und die beiden Stirnflächen des Magnetkerns in jeder zweiten Sendespule sind zur zweiten Aufnahmerille (503) ausgerichtet;
Nachdem ein Stift (400) in die zweite Aufnahmerille (503) gelegt wurde, sind sowohl die beiden Stirnflächen des Magnetkerns in einer der beiden zweiten Sendespulen (510) als auch eine Stirnfläche eines Magnetkerns in jeweils einer der beiden in Serie geschalteten ersten Empfangsspulen (481a, 481b), die im Stift (400) angeordnet sind und der einen der beiden zweiten Sendespulen (510) zugewandt ist, teilweise direkt gegenüberliegend angeordnet. Ebenso sind sowohl die beiden Stirnflächen des Magnetkerns der anderen der beiden zweiten Sendespulen (510) als auch eine Stirnfläche des Magnetkerns jeder ersten Empfangsspule, die der anderen der beiden zweiten Sendespulen (510) zugewandt ist, jeweils zumindest in einem Bereich direkt gegenüberliegend angeordnet; und
Die beiden zweiten Sendespulen (510) sind so konfiguriert, dass sie nach dem Einlegen des Stifts (400) in die zweite Aufnahmerille (503) ein zweites, wechselndes elektromagnetisches Feld an die beiden ersten Empfangsspulen abgeben, um den Stift (400) aufzuladen.

7. Die drahtlose Ladestifthülle (500) nach Anspruch 6, wobei nach dem Einlegen des Stifts (400) in die zweite Aufnahmerille (503) die orthogonalen Projektionen, in eine zweite Zielrichtung, beider Stirnflächen des Magnetkerns in einer der beiden zweiten Sendespulen (510) mindestens die orthogonalen Projektionen, in der zweiten Zielrichtung, der Stirnfläche des Magnetkerns in jeder ersten Empfangsspule abdecken, die der einen der beiden zweiten Sendespulen (510) zugewandt ist und jeweils damit gekoppelt ist. Die orthogonalen Projektionen, in der zweiten Zielrichtung, beider Stirnflächen des Magnetkerns in der anderen der beiden zweiten Sendespulen (510) decken mindestens die orthogonalen Projektionen, in der zweiten Zielrichtung, der Stirnfläche des Magnetkerns in jeder ersten Empfangsspule ab, die der anderen der beiden zweiten Sendespulen (510) zugewandt und mit ihr gekoppelt ist; und die zweite Zielrichtung ist die Richtung, in die eine der beiden zweiten Sendespulen (510) zur zweiten Aufnahmerille (503) weist.

8. Die kabellose Lade-Stiftbox (500) gemäß Anspruch 7, wobei nach dem Platzieren des Stifts (400) in der zweiten Aufnahmerille (503) die Mittelachse jeder zweiten Sendespule mit der Mittelachse der beiden in Reihe geschalteten ersten Empfangsspulen (481a, 481b) zusammenfällt; und die Mittelachse jeder zweiten Sendespule eine Mittelachse zwischen den Mittelpunkten der beiden Stirnflächen des Magnetkerns der jeweiligen zweiten Sendespule ist, und die Mittelachse der beiden in Reihe geschalteten ersten Empfangsspulen (481a, 481b) eine Mittelachse zwischen den Mittelpunkten der beiden Stirnflächen darstellt, die von Magnetkernen in den beiden in Reihe geschalteten ersten Empfangsspulen (481a, 481b) gebildet werden und auf derselben Seite angeordnet sind.

9. Die kabellose Lade-Stiftbox (500) gemäß Anspruch 6, wobei für jede der beiden Stirnflächen des Magnetkerns in einer der beiden zweiten Sendespulen (510) ein Abstand zwischen der Stirnfläche und der Stirnfläche des Magnetkerns in jeder ersten Empfangsspule, welche der jeweils einen der beiden zweiten Sendespulen (510) zugeordnet ist, 3 mm bis 5 mm beträgt; und
für jede der beiden Stirnflächen des Magnetkerns in der anderen der beiden zweiten Sendespulen (510) ein Abstand zwischen der Stirnfläche und der Stirnfläche des Magnetkerns in jeder ersten Empfangsspule, welche der jeweils anderen der beiden zweiten Sendespulen (510) zugeordnet ist, 3 mm bis 5 mm beträgt.

10. Die kabellose Lade-Stiftbox (500) gemäß Anspruch 6, wobei die kabellose Lade-Stiftbox (500) weiterhin ein Stromversorgungsmodul und einen zweiten Tx-Chip (513) umfasst, die im Gehäuse (502) angeordnet sind, und das Stromversorgungsmodul, der zweite Tx-Chip (513) und die beiden zweiten Sendespulen (510) nacheinander verbunden sind;
das Stromversorgungsmodul ist konfiguriert, um ein drittes Gleichstrom-Elektrisches Signal an den zweiten Tx-Chip (513) bereitzustellen;
der zweite Tx-Chip (513) ist konfiguriert, das vom Stromversorgungsmodul bereitgestellte dritte Gleichstrom-Elektrische Signal in ein viertes Wechselstrom-Elektrisches Signal umzuwandeln und das vierte Wechselstrom-Elektrische Signal an die beiden zweiten Sendespulen (510) zu übertragen; und
die beiden zweiten Sendespulen (510) sind dazu konfiguriert, das zweite wechselnde elektromagnetische Feld als Reaktion auf das vierte Wechselstrom-Elektrische Signal zu erzeugen und das zweite wechselnde elektromagnetische Feld an die beiden ersten Empfangsspulen zu übertragen.

11. Ein kabelloses Ladesystem, das eine kabellose Lade-Stiftbox (500) gemäß Anspruch 6 und einen Stift (400) umfasst, wobei:
Der Stift (400) umfasst zwei in Reihe geschaltete erste Empfangsspulen (481a, 481b), die im Stiftkörper (400) angeordnet sind. Die beiden in Reihe geschalteten ersten Empfangsspulen (481a, 481b) sind in Längsrichtung des Stifts (400) verteilt, die Wickelrichtungen der beiden in Reihe geschalteten ersten Empfangsspulen (481a, 481b) sind gleich, die Form eines Magnetkerns in jeder ersten Empfangsspule ist säulenförmig, zwei Stirnflächen des Magnetkerns in jeder ersten Empfangsspule sind einander gegenüber angeordnet und beide Stirnflächen des Magnetkerns in jeder ersten Empfangsspule sind zur Seitenwand des Stiftkörpers (400) gerichtet; und
Die beiden ersten Empfangsspulen sind dazu vorgesehen, durch Induktion des von den beiden zweiten Sendespulen (510) bereitgestellten zweiten alternierenden elektromagnetischen Feldes ein drittes Wechselstromsignal zu erzeugen, um den Stift (400) zu laden.

## Revendications

1. Système de charge sans fil comprenant un dispositif terminal (300) et un stylet (400), dans lequel
le dispositif terminal (300) comprend un boîtier et deux premières bobines émettrices (310c, 310d) connectées en série, disposées dans le boîtier, le boîtier possède une première rainure d'accueil (306), les deux premières bobines émettrices connectées en série (310c, 310d) sont respectivement situées de part et d'autre à l'extérieur de la première rainure d'accueil (306), les sens d'enroulement des deux bobines émettrices connectées en série (310c, 310d) sont identiques, la forme d'un noyau magnétique dans chaque première bobine émettrice est l'une des formes suivantes : en U, en V ou en C ; et les deux faces d'extrémité du noyau magnétique dans chaque première bobine émettrice sont orientées vers la première rainure d'accueil (306) ;
le stylet (400) comprend un corps de stylet et deux premières bobines réceptrices (481a, 481b) connectées en série et disposées dans le corps du stylet, les deux premières bobines réceptrices connectées en série (481a, 481b) sont réparties dans la direction longitudinale du stylet (400), les sens d'enroulement des deux bobines réceptrices connectées en série (481a, 481b) sont identiques, la forme du noyau magnétique dans chaque première bobine réceptrice est colonne, les deux faces d'extrémité du noyau magnétique dans chaque première bobine réceptrice sont opposées l'une à l'autre, et les deux faces d'extrémité du noyau magnétique dans chaque première bobine réceptrice sont dirigées vers une paroi latérale du corps du stylet ;
après que le stylet (400) ait été placé dans la première rainure d'accueil (306), les deux faces d'extrémité du noyau magnétique dans l'une des deux premières bobines émettrices et une face d'extrémité du noyau magnétique dans chaque première bobine réceptrice orientée vers ladite première bobine émettrice, couplées à chaque bobine réceptrice, présentent au moins des zones partiellement disposées directement face à face, et les deux faces d'extrémité du noyau magnétique dans l'autre des deux premières bobines émettrices et une face d'extrémité du noyau magnétique dans chaque première bobine réceptrice orientée vers l'autre des deux premières bobines émettrices, couplées à chaque bobine réceptrice, présentent au moins des zones partiellement disposées directement face à face ; et
les deux premières bobines émettrices sont conçues pour fournir un premier champ électromagnétique alternatif aux deux premières bobines réceptrices après que le stylet (400) ait été placé dans la première rainure d'accueil (306), et les deux premières bobines réceptrices sont conçues pour générer un premier signal de courant électrique alternatif par induction du premier champ électromagnétique alternatif fourni par les deux premières bobines émettrices, afin de charger le stylet (400).

2. Le système de charge sans fil selon la revendication 1, dans lequel, après que le stylet (400) ait été placé dans la première rainure de logement (306), les projections orthogonales, dans une première direction cible, des deux faces d'extrémité du noyau magnétique dans l'une des deux premières bobines d'émission couvrent au moins les projections orthogonales, dans la première direction cible, de la face d'extrémité du noyau magnétique dans chaque première bobine de réception qui fait face à l'une des deux premières bobines d'émission couplées à chaque première bobine de réception ; les projections orthogonales, dans la première direction cible, des deux faces d'extrémité du noyau magnétique dans l'autre des deux premières bobines d'émission couvrent au moins les projections orthogonales, dans la première direction cible, de la face d'extrémité du noyau magnétique dans chaque première bobine de réception qui fait face à l'autre des deux premières bobines d'émission couplées à chaque première bobine de réception ; et la première direction cible est une direction dans laquelle l'une des deux premières bobines d'émission pointe vers la première rainure de logement (306).

3. Le système de charge sans fil selon la revendication 1, dans lequel, après que le stylet (400) ait été placé dans la première rainure de logement (306), un axe central de chaque première bobine d'émission coïncide avec un axe central des deux premières bobines de réception connectées en série (481a, 481b) ; et l'axe central de chaque première bobine d'émission est un axe central entre les points centraux des deux faces d'extrémité du noyau magnétique dans la bobine d'émission correspondante, et l'axe central des deux premières bobines de réception connectées en série (481a, 481b) est un axe central entre les points centraux des deux faces d'extrémité des noyaux magnétiques dans les deux bobines de réception connectées en série (481a, 481b) qui sont disposées du même côté.

4. Le système de charge sans fil selon la revendication 1, dans lequel, pour chacune des deux faces d'extrémité du noyau magnétique dans l'une des deux premières bobines d'émission, la distance entre la face d'extrémité et la face d'extrémité du noyau magnétique dans chaque première bobine de réception qui fait face à l'une des deux premières bobines d'émission couplées à chaque première bobine de réception est de 3 mm à 5 mm ; et
pour chacune des deux faces d'extrémité du noyau magnétique dans l'autre des deux premières bobines d'émission, la distance entre la face d'extrémité et la face d'extrémité du noyau magnétique dans chaque première bobine de réception qui fait face à l'autre des deux premières bobines d'émission couplées à chaque première bobine de réception est de 3 mm à 5 mm.

5. Le système de charge sans fil selon la revendication 1, dans lequel le stylet (400) comprend en outre une première puce Rx (482), une puce de gestion de charge et une première batterie (484) qui sont disposées dans le corps du stylet ; les deux premières bobines de réception, la première puce Rx (482), la puce de gestion de charge et la première batterie (484) sont connectées séquentiellement ; le dispositif terminal (300) comprend en outre une seconde batterie (311), un premier circuit régulateur de tension (312) et une première puce Tx (313) qui sont disposés dans le boîtier, et la seconde batterie (311), le premier circuit régulateur de tension (312), la première puce Tx (313) et les deux premières bobines d'émission sont connectés séquentiellement ;
la seconde batterie (311) est configurée pour fournir un premier signal électrique en courant continu au premier circuit régulateur de tension (312) ;
le premier circuit régulateur de tension (312) est configuré pour effectuer un traitement de régulation de tension sur le premier signal électrique en courant continu, et fournir le premier signal électrique en courant continu obtenu après le traitement de régulation de tension à la première puce Tx (313) ;
la première puce Tx (313) est configurée pour convertir le premier signal électrique en courant continu obtenu après le traitement de régulation de tension en un second signal électrique en courant alternatif, et transmettre le second signal électrique en courant alternatif aux deux premières bobines d'émission ;
les deux premières bobines d'émission sont configurées pour générer le premier champ électromagnétique alternatif en réponse au second signal électrique en courant alternatif ;
les deux premières bobines de réception sont configurées pour générer le premier signal électrique en courant alternatif en induisant le premier champ électromagnétique alternatif et transmettre le premier signal électrique en courant alternatif à la première puce Rx (482) ;
la première puce Rx (482) est configurée pour convertir le premier signal électrique en courant alternatif en un second signal électrique en courant continu, et transmettre le second signal électrique en courant continu à la puce de gestion de charge ; et
la puce de gestion de charge est configurée pour charger la première batterie (484) à l'aide du second signal électrique en courant continu.

6. Une boîte de stylet à chargement sans fil (500), comprenant un corps de boîte (502) et deux deuxièmes bobines d'émission connectées en série (510) disposées dans le corps de boîte (502), le corps de boîte (502) comportant une seconde rainure de logement (503), les deux deuxièmes bobines d'émission connectées en série (510) étant respectivement situées de chaque côté opposé à l'extérieur de la seconde rainure de logement (503), les sens d'enroulement des deux deuxièmes bobines d'émission connectées en série (510) étant identiques, la forme du noyau magnétique dans chaque première bobine d'émission étant au choix en forme de U, de V ou de C, et les deux faces d'extrémité du noyau magnétique dans chaque deuxième bobine d'émission faisant face à la seconde rainure de logement (503) ;
après qu'un stylet (400) est placé dans la seconde rainure de logement (503), les deux faces d'extrémité du noyau magnétique de l'une des deux deuxièmes bobines d'émission (510) et une face d'extrémité du noyau magnétique de chacune des deux premières bobines de réception connectées en série (481a, 481b) disposées dans le stylet (400), lesquelles font face à ladite deuxième bobine d'émission (510) couplée à chaque première bobine de réception, présentent au moins des régions partiellement disposées strictement en vis-à-vis l'une de l'autre; et les deux faces d'extrémité du noyau magnétique dans l'autre des deux deuxièmes bobines d'émission (510) et une face d'extrémité du noyau magnétique dans chaque première bobine de réception qui fait face à ladite autre deuxième bobine d'émission (510) couplée à chaque première bobine de réception présentent au moins des régions partiellement disposées strictement en vis-à-vis l'une de l'autre ; et
les deux deuxièmes bobines d'émission (510) sont configurées pour délivrer un second champ électromagnétique alternatif aux deux premières bobines de réception après que le stylet (400) est placé dans la seconde rainure de logement (503), afin de charger le stylet (400) ;

7. La boîte de stylet à chargement sans fil (500) selon la revendication 6, dans laquelle, après que le stylet (400) est placé dans la seconde rainure de logement (503), les projections orthogonales, dans une seconde direction cible, des deux faces d'extrémité du noyau magnétique dans l'une des deux deuxièmes bobines d'émission (510) recouvrent au moins les projections orthogonales, dans la seconde direction cible, de la face d'extrémité du noyau magnétique dans chaque première bobine de réception qui fait face à ladite deuxième bobine d'émission (510) couplée à chaque première bobine de réception ; les projections orthogonales, dans la seconde direction cible, des deux faces d'extrémité du noyau magnétique dans l'autre des deux deuxièmes bobines d'émission (510) recouvrent au moins les projections orthogonales, dans la seconde direction cible, de la face d'extrémité du noyau magnétique dans chaque première bobine de réception qui fait face à ladite autre deuxième bobine d'émission (510) couplée à chaque première bobine de réception ; et la seconde direction cible est la direction dans laquelle l'une des deux deuxièmes bobines d'émission (510) pointe vers la seconde rainure de logement (503).

8. Boîtier de stylet à chargement sans fil (500) selon la revendication 7, dans lequel, après que le stylet (400) a été placé dans la seconde rainure de logement (503), un axe central de chaque deuxième bobine d'émission coïncide avec un axe central des deux premières bobines de réception (481a, 481b) connectées en série ; et l'axe central de chaque deuxième bobine d'émission est l'axe central entre les points centraux des deux faces d'extrémité du noyau magnétique de la bobine d'émission concernée, et l'axe central des deux premières bobines de réception connectées en série (481a, 481b) est l'axe central entre les points centraux de deux faces d'extrémité des noyaux magnétiques des deux premières bobines de réception connectées en série (481a, 481b) disposés du même côté.

9. Boîtier de stylet à chargement sans fil (500) selon la revendication 6, dans lequel, pour chacune des deux faces d'extrémité du noyau magnétique dans l'une des deux deuxièmes bobines d'émission (510), la distance entre la face d'extrémité et la face d'extrémité du noyau magnétique de chaque première bobine de réception faisant face à celle des deux deuxièmes bobines d'émission (510), couplée à chaque première bobine de réception, est de 3 mm à 5 mm ; et
pour chacune des deux faces d'extrémité du noyau magnétique dans l'autre des deux deuxièmes bobines d'émission (510), la distance entre la face d'extrémité et la face d'extrémité du noyau magnétique dans chaque première bobine de réception faisant face à l'autre des deux deuxièmes bobines d'émission (510), couplée à chaque première bobine de réception, est de 3 mm à 5 mm.

10. Boîtier de stylet à chargement sans fil (500) selon la revendication 6, dans lequel ledit boîtier comprend également un module d'alimentation électrique et une deuxième puce d'émission (513) disposés dans le corps du boîtier (502), le module d'alimentation, la deuxième puce d'émission (513) et les deuxièmes bobines d'émission (510) étant connectés en série ;
le module d'alimentation est configuré pour fournir un troisième signal électrique en courant continu à la deuxième puce d'émission (513) ;
la deuxième puce d'émission (513) est conçue pour convertir le troisième signal électrique en courant continu fourni par le module d'alimentation en un quatrième signal électrique en courant alternatif, et transmettre ce quatrième signal électrique en courant alternatif aux deux deuxièmes bobines d'émission (510) ; et
les deux deuxièmes bobines d'émission (510) sont conçues pour générer le deuxième champ électromagnétique alternatif en réponse au quatrième signal électrique en courant alternatif, et transmettre ce deuxième champ électromagnétique alternatif aux deux premières bobines de réception.

11. Système de chargement sans fil comprenant un boîtier de stylet à chargement sans fil (500) selon la revendication 6, et un stylet (400), **caractérisé en ce que** :
le stylet (400) comprend deux premières bobines de réception (481a, 481b) connectées en série, disposées dans le corps du stylet (400). Les deux premières bobines de réception connectées en série (481a, 481b) sont réparties dans la direction longitudinale du stylet (400), les sens d'enroulement des deux bobines de réception sont identiques, la forme du noyau magnétique dans chaque bobine de réception est cylindrique, les deux faces d'extrémité du noyau magnétique de chaque bobine de réception sont disposées l'une en face de l'autre, et les deux faces d'extrémité du noyau magnétique de chaque bobine de réception font face à une paroi latérale du corps du stylet (400) ; et
les deux premières bobines de réception sont conçues pour générer un troisième signal électrique alternatif en induisant le deuxième champ électromagnétique alternatif fourni par les deux bobines d'émission secondaires (510), afin de charger le stylet (400).
